(19) Europäisches Patentamt / European Patent Office / Office européen des brevets

(11) **EP 4 288 501 B1**

(12) **EUROPÄISCHE PATENTSCHRIFT**

(45) Veröffentlichungstag und Bekanntmachung des Hinweises auf die Patenterteilung:
**02.04.2025  Patentblatt 2025/14**

(21) Anmeldenummer: **22708797.0**

(22) Anmeldetag: **07.02.2022**

(51) Internationale Patentklassifikation (IPC):
**C09J 153/02** (2006.01)    **C09J 7/35** (2018.01)
**C09J 7/10** (2018.01)    **C08K 5/098** (2006.01)
**C08K 5/1515** (2006.01)    **C09J 7/26** (2018.01)
**C09J 7/38** (2018.01)

(52) Gemeinsame Patentklassifikation (CPC):
(C-Sets verfügbar)
**C09J 7/387; C09J 7/26; C09J 153/02;**
C08L 2312/00; C09J 2203/346; C09J 2203/354;
C09J 2453/00    (Forts.)

(86) Internationale Anmeldenummer:
**PCT/EP2022/052855**

(87) Internationale Veröffentlichungsnummer:
**WO 2022/167646 (11.08.2022 Gazette 2022/32)**

(54) **POLYVINYLAROMAT-POLYDIEN-BLOCKCOPOLYMER BASIERENDE HAFTKLEBEMASSEN MIT GESTEIGERTER WÄRMESCHERFESTIGKEIT**

POLYVINYL AROMATE-POLYDIENE-BLOCK COPOLYMER-BASED ADHESIVE COMPOUNDS HAVING IMPROVED THERMAL SHEAR STRENGTH

COMPOSÉS ADHÉSIFS À BASE D'UN COPOLYMÈRE À BLOCS POLYVINYLAROMATIQUE-POLYDIÈNE AYANT UNE RÉSISTANCE AU CISAILLEMENT THERMIQUE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **05.02.2021  DE 102021201094**

(43) Veröffentlichungstag der Anmeldung:
**13.12.2023  Patentblatt 2023/50**

(73) Patentinhaber: **TESA SE**
**22848 Norderstedt (DE)**

(72) Erfinder:
• **GRÜNAUER, Judith**
**22117 Hamburg (DE)**

• **DOLLASE, Thilo**
**22397 Hamburg (DE)**
• **LÜHMANN,  Bernd**
**22844 Norderstedt (DE)**
• **GARGIULO, Jessika**
**20255 Hamburg (DE)**

(74) Vertreter: **tesa SE**
**Hugo-Kirchberg-Straße 1**
**22848 Norderstedt (DE)**

(56) Entgegenhaltungen:
**WO-A1-2020/048799    DE-A1- 102016 202 018**

(52) Gemeinsame Patentklassifikation (CPC): (Forts.)

C-Sets
**C09J 153/02, C08K 5/098, C08K 5/1515;**
**C09J 153/02, C08K 5/098, C08K 5/1515,**
**C08L 23/24**

**Beschreibung**

Die Erfindung betrifft Haftklebemassen basierend auf Polyvinylaromat-Polydien-Blockcopolymeren, die mindestens eine Sorte eines kationisch härtbaren Reaktivharzes enthalten, über deren Härtung eine Steigerung der Wärmescherfestigkeit erreicht wird. Die Erfindung betrifft außerdem Klebebänder, die mindestens eine Schicht einer solchen Haftklebemasse enthalten und ein Verfahren zu deren Herstellung.

Polyvinylaromaten-Polydien-Blockcopolymer basierende Haftklebemassen zählen zu den gängigen Haftklebmassefamilien für Selbstklebeprodukte. Sie lassen sich vorteilhaft zur Verklebung einer breiten Palette an zu verklebenden wie auch unpolaren Materialien einsetzen. Sie weisen bei üblichen Anwendungstemperaturen bei hohen Klebkräften gleichzeitig auch eine gute Kohäsion auf. Polyvinylaromaten-Polydien-Blockcopolymer basierende Haftklebemassen lassen sich lösemittelfrei aus der Schmelze und auch aus Lösung verarbeiten.

Stetiger Verbesserungsbedarf besteht für viele Anwendungen, beispielsweise im Automobilbereich, in der Wärmescherfestigkeit von Haftklebemassen basierend auf kommerziell erhältlichen Polyvinylaromaten-Polydien-Blockcopolymeren, was mit dem spezifischen physikalischen Vernetzungsprinzip in diesen Formulierungen zusammenhängt. Durch gezielt genutzte Unverträglichkeit zwischen den verschiedenen Blocksorten und deren Entmischung bilden sich Polyvinylaromaten-reiche Bereiche, die in Temperaturbereichen unterhalb ihrer Glasübergangstemperatur als Vernetzungspunkte dienen. Wird die Glasübergangstemperatur erreicht, sinkt die Kohäsion. Es besteht nach wie vor Bedarf an Formulierungen für Selbstklebebänder, die eine ausgezeichnete Balance aus hoher Wärmescherfestigkeit und guter Klebkraft aufweisen.

Verschiedene Konzepte sind beschrieben worden, wie Verbesserungen in Bezug auf die Wärmescherfestigkeit von Polyvinylaromat-Polydien-Blockcopolymer basierenden Formulierungen erreicht werden kann.

So lässt sich durch Einfluss von Molmasse (DE 10 2012 212 879 A1) und Architektur (US 5,372,870 A) der Polyvinylaromaten-Polydien-Blockcopolymere die Wärmescherfestigkeit der Haftklebemasseformulierung verbessern.

Hierzu zählt auch die Verwendung von mit den Polyvinylaromaten-reichen Domänen mischbaren Zuschlagstoffen mit hoher Erweichungstemperatur. WO 00/24840 A1 beansprucht zu diesem Zweck Polyphenylenoxid-Harz. Eastman Chemical beschreibt hocherweichende Aromatenharze in einem Technischen Bulletin ("Kristalex and Endex Hydrocarbon Resins for Improved PSA Performance", Eastman Chemical Company, Document Number TT-85, August 2007).

Beschrieben wird zudem die strahlenchemische Vernetzung der Polyvinylaromaten-Polydien basierenden Formulierungen und zwar ohne (WO 00/22062 A1) oder mit zusätzlichen Vernetzern (DE 10 2008 056 980 A1). Vernetzer werden üblicherweise in geringen Mengen unterhalb 10 Gew.-% eingesetzt, wie z. B. in DE 10 2015 109 659 A1 (0,05 bis 5 Gew.-% Vernetzungshilfsmittel) beansprucht wird. Die Vernetzung läuft dabei über einen radikalischen Mechanismus und führt zu einer kovalenten (chemischen) Verknüpfung von Elastomermolekülen.

Blockcopolymere in Kombination mit Epoxid-Harzen sind aus Beschreibungen zu Reaktivbeschichtungsmitteln bekannt. Reaktivbeschichtungsmittel auf Epoxid-Basis weisen nach Aushärtung typischerweise eine hohe Härte aber auch Sprödigkeit auf. Solche Kleb- und Beschichtungsstoffe können durch Zusatz thermoplastischer Elastomere schlagzäh modifiziert werden wie zum Beispiel in der DE 10 2009 026 548 A1 ausgeführt wird. Die Majoritätskomponente in solchen auch als Vergussmassen bezeichneten Systemen stellen üblicherweise die Epoxide dar (Thomas, S., Sinturel, C., & Thomas, R. (Eds.). (2014). Micro and nanostructured epoxy/rubber blends. John Wiley & Sons.).

Formulierungen mit Polyvinylaromatenblockcopolymeren und Epoxiden sind auch aus DE 10 2012 202 377 A1 und DE 10 2015 212 058 A1 bekannt. Die hier beanspruchten Formulierungen basieren auf Polystyrol-Polyisobutylen-Blockcopolymeren insbesondere für wasserdampfsperrende Klebemassen. Epoxide werden als Reaktivverdünner beschrieben, die vor der Härtung zu sehr guter Laminierfähigkeit der Klebebänder führen und durch Härtung ihr endgültiges anwendungstechnisches Leistungsprofil aufbauen. Die Härtung erfolgt dabei entweder strahlenchemisch oder thermisch. Polydien-basierende Klebemassen sind in diesen Dokumenten nicht offenbart. Polyvinylaromaten-Polydien-Blockcopolymer-basierende Formulierungen sind nicht genannt.

JP 2000/290 619 A1 beschreibt Formulierungen mit einem Elastomer (100 Gewichtsteile), einem kationisch härtbaren Material wie z. B. Epoxid (10 bis 200 Gewichtsteile) und einem photokationischen Polymerisationsinitiator. Spezifisch wird die Kombination aus 100 Gewichtsteilen eines SBS (Tufprene A bzw. Epofriend A1010) mit 120 Gewichtsteilen des Glycidylethers Epicoat 828 aufgeführt. Tufprene A und Epofriend A1010 weisen einen Anteil an Polystyrol (PS) von 40 % auf. Der Offenbarung ist zu entnehmen, dass es sich bei den Klebebändern um Reaktivklebebänder handelt, die unmittelbar vor der Verklebung des Zielverbunds zur Härtung gebracht werden. Härtung solcher Formulierungen unabhängig von einer direkt anschließenden Lamination führt vermutlich zu Schichten, die nicht mehr haftklebrig sind. Zusammensetzungen für Selbstklebebänder, die eine ausgezeichnete Balance aus hoher Wärmescherfestigkeit und guter Klebkraft aufweisen, lehren diese Offenbarung nicht.

JP 2018/002 950 A1 beansprucht Klebemassen basierend auf Styrol-Blockcopolymeren mit einem Epoxid-Harz, einem Härter und 1-Cyanoethyl-2-ethyl-4-methylimidazol als Härtungsbeschleuniger für das Epoxid-Harz für Heißsiegelfolien.

WO 1999/009101 A1 und US 7,429,419 B2 offenbaren Klebemassen mit einem Epoxid-Harz und einem mit einer Epoxid-Gruppe funktionalisierten Blockcopolymer.

Die DE 10 2018 202 545 A1 beansprucht spezielle Formulierungen basierend auf insbesondere Polystyrol-Polyisobutylen-Blockcopolymeren, die ebenfalls Epoxide enthalten. Jedoch können diese Epoxide vorteilhaft auch bereits vor der Laminierung thermisch und/oder strahlenchemisch gehärtet werden. Polyvinylaromaten-Polydien-Blockcopolymer-basierende Formulierungen sind nicht genannt.

Die WO 2020/048799 A1 offenbart Haftklebemassen enthaltend Polyvinylaromat-Polydien-Blockcopolymere und optional ein Reaktivharz und/oder ein Klebharz.

Die DE 10 2016 202018 A1 offenbart eine Haftklebemasse enthaltend 52 bis 65 Gew.-% einer Elastomer-komponente, welche zu mindestsn 90 Gew.-% aus Polyvinylaromat-Polybutadien-Blockcopolymer besteht, und 30 bis 45 Gew.-% zumindest eines Klebharzes.

Es besteht nach wie vor die Aufgabe, Formulierungen für Selbstklebebänder zur Verfügung zu stellen, die eine ausgezeichnete Balance aus hoher Wärmescherfestigkeit, insbesondere eine SAFT-Temperatur nach Test I von mindestens 150 °C, und eine gute Klebkraft nach Test II von mindestens 4 N/cm aufweisen.

Obwohl aus verschiedenen Quellen Formulierungsvorschläge vorliegen, die Kombinationen aus Blockcopolymeren und Epoxid-Harzen umfassen, lässt sich die an Formulierungen für Selbstklebebänder gestellte Anforderung nach ausgezeichneter Balance aus hoher Wärmescherfestigkeit und guter Klebkraft nicht durch beliebige Auswahl von Blockcopolymeren und Epoxid-Harzen erreichen. Als umso überraschender hat sich gezeigt, dass sich durch Formulierungen, d.h. Haftklebemassen, mit einer Basisformulierung enthaltend

(i) 25 bis 45 Gew.-%, vorzugsweise 30 bis 40 Gew.-%, mindestens einer Elastomerkomponente enthaltend mindestens ein Polyvinylaromat-Polydien-Blockcopolymer,

wobei das Polyvinylaromat-Polydien-Blockcopolymer mindestens anteilig einen Aufbau AB-A, $(A-B)_n$, $(A-B)_n X$ oder $(A-B-A)_n X$ hat, worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen oder für ein im Polydien-Block teilhydriertes Derivat eines solchen Polymers,
- X für den Rest eines Kopplungsreagenzes oder Initiators und
- n für eine ganze Zahl $\geq 2$ stehen,

wobei die Peak-Molmasse des mindestens einen Polyvinylaromat- Polydien-Blockcopolymers nach Test IVa bei mindestens 160 000 g/mol liegt, bevorzugt bei mindestens 200 000 g/mol,
wobei der Anteil an A-Blöcken in dem mindestens einen Polyvinylaromat-Polydien-Blockcopolymer bei mindestens 8 Gew.-% und höchstens 25 Gew.-% liegt, und
wobei der Anteil an Diblockcopolymer A-B enthaltend Blöcke A und B wie vorstehend definiert bei höchstens 25 Gew.-% liegt bezogen auf die gesamte Elastomerkomponente,

(ii) 33 bis 55 Gew.-%, vorzugsweise 40 bis 50 Gew.-%, mindestens einer Klebharzkomponente mit mindestens einem Klebharz, wobei das mindestens eine Klebharz eine Erweichungstemperatur (Ring & Ball, Test VII) von $\geq 80$ °C, vorzugsweise $\geq 100$ °C, und typischerweise bis zu 130 °C aufweist, und
(iii) 13 bis 30 Gew.-%, vorzugsweise 16 bis 25 Gew.-%, mindestens einer Reaktivharzkomponente enthaltend zu mindestens 70 Gew.-% mindestens ein Reaktivharz auf Basis eines cyclischen Ethers mit einem dispersen Anteil des Hansen-Parameters, $\delta_D$ von 17,82 bis 17,50 $MPa^{1/2}$, vorzugsweise 17,80 bis 17,70 $MPa^{1/2}$, jeweils bezogen auf die Basisformulierung, wobei die Summe aus der Elastomerkomponente und der Reaktivharzkomponente mindestens 38 Gew.-% und höchstens 68 Gew.-% beträgt, die gestellten Anforderungen erreichen lassen.

In der erfindungsgemäßen Basisformulierung addieren sich die Gewichtsanteile der Elastomerkomponente, Klebharzkomponente und Reaktivharzkomponente zu 100 Gew.-%. Die Summe aus Elastomerkomponente und Reaktivharzkomponente beträgt zudem mindestens 38 Gew.-% und höchstens 68 Gew.-%, bevorzugt mindestens 50 Gew.-% und höchstens 60 Gew.-%, jeweils bezogen auf die erfindungsgemäße Basisformulierung. Falls die Basisformulierung, wie erfindungsgemäß bevorzugt, Lösungsmittel enthält, bleibt das Lösungsmittel bei der Angabe der Gewichtsanteile unberücksichtigt.

Die Formulierung enthält zudem einen Initiator für die kationische Härtung (Härter-Komponente) der Reaktivharzkomponente sowie optional weitere Bestandteile wie Weichmacher und/oder Additive. Die Gesamthaftklebemasseformulierung setzt sich damit aus Basisformulierung, Härter-Komponente und optional weiteren Bestandteilen zusammen. Die Begriffe "Haftklebemasse" und "Selbstklebemasse" werden im Rahmen der vorliegenden Anmeldung synonym verwendet.

Die vorliegende Erfindung betrifft zudem eine gehärtete Haftklebemasse erhältlich oder erhalten durch Härten einer wie vorstehend beschriebenen Haftklebemasse.

Sie betrifft zudem ein Klebeband, das mindestens eine Schicht einer wie vorstehend beschriebenen Haftklebemasse oder gehärteten Haftklebemasse umfasst. Falls das Klebeband einen Träger enthält, so ist die Haftklebemasse vorzugsweise vollflächig darauf aufgebracht. Von der vorliegenden Erfindung sind jedoch auch Ausführungsformen umfasst, bei denen die Haftklebemasse lediglich teilflächig aufgebracht ist.

Die vorliegenden Erfindung betrifft außerdem ein Verfahren zur Herstellung eines solchen Klebebands, bei dem eine lösungsmittelhaltige Klebemasse beschichtet und getrocknet wird und die thermische Härtung der Klebemasse während des Trocknungsprozesses erfolgt oder initiiert wird.

Bevorzugte Ausführungsformen der genannten Gegenstände befinden sich in den abhängigen Ansprüchen.

Haftklebemasse:

Im Folgenden werden die Bestandteile der erfindungsgemäßen Haftklebemasse näher erläutert.

(a) Basisformulierung - (i) Elastomerkomponente:

Die Elastomerkomponente enthält mindestens ein Polyvinylaromat-Polydien-Blockcopolymer. Bei dem Polyvinylaromat-Polydien-Blockcopolymer handelt es sich vorzugsweise um ein Polystyrol-Polydien-Blockcopolymer und hier ganz besonders um ein Polystyrol-Polybutadien-, Polystyrol-Polyisopren- oder Polystyrol-Polyfarnesen-Blockcopolymer, wie insbesondere ein Polystyrol-Polybutadien-Blockcopolymer.

Das Polyvinylaromat-Polydien-Blockcopolymer hat mindestens anteilig einen Aufbau A-B-A, $(A-B)_n$, $(A-B)_nX$ oder $(A-B-A)_nX$,

worin

- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen oder für im Polydien-Block ein teilhydriertes Derivat eines solchen Polymers;
- X für den Rest eines Kopplungsreagenzes oder Initiators und
- n für eine ganze Zahl $\geq 2$ stehen.

In der vorliegenden Anmeldung wird unter einem Triblockcopolymer typischerweise ein Blockcopolymer mit einem Aufbau A-B-A oder $(A-B)_2X$ verstanden. Ebenso wird in der vorliegenden Anmeldung unter einem radialen Blockcopolymer typischerweise ein Blockcopolymer mit einem Aufbau $(A-B)_nX$ oder $(A-B-A)_nX$ verstanden, worin n für eine ganze Zahl $\geq 3$ steht. Bevorzugte radiale Blockcopolymere haben dabei einen Aufbau $(A-B)_nX$, worin n für eine ganze Zahl $\geq 3$ steht. In der vorliegenden Anmeldung werden die Begriffe "radial", "sternförmig" und "Multiarm" synonym verwendet.

Geeignete Blockcopolymere (Vinylaromatenblockcopolymere) umfassen also einen oder mehrere gummiartige Blöcke B (Weichblöcke). Mindestens ein Blockcopolymer weist zwei oder mehr glasartige Blöcke A (Hartblöcke) auf. Vorzugsweise enthält die Elastomer-Komponente mindestens ein Triblockcopolymer A-B-A oder $(A-B)_2X$ und/oder mindestens ein radiales $(A-B)_nX$-Blockcopolymer, worin n für eine ganze Zahl $\geq 3$ steht. Ein Gemisch aus mindestens einem Triblockcopolymer A-B-A oder $(A-B)_2X$ und mindestens einem radialen $(AB)_nX$-Blockcopolymer ist dabei besonders bevorzugt. Im radialen $(A-B)_nX$-Blockcopolymer ist n vorzugsweise 3 oder 4. Im Einklang damit weist mindestens ein Blockcopolymer bevorzugt einen Aufbau A-B-A, $(A-B)_2X$, $(A-B)_3X$ oder $(A-B)_4X$ auf, wobei für A, B und X die vorstehenden Bedeutungen gelten. In einer vorteilhaften Auslegung weisen alle Blockcopolymere einen Aufbau A-B-A, $(A-B)_2X$, $(A-B)_3X$ oder $(A-B)_4X$ auf, wobei für A, B und X die vorstehenden Bedeutungen gelten. Es ist aber auch vorteilhaft, wenn die Elastomer-Komponente aus einem Gemisch aus Blockcopolymeren mit einem Aufbau A-B-A, $(A-B)_2X$, $(A-B)_3X$ oder $(A-B)_4X$ sowie Blockcopolymeren anderer Architektur wie in geringer Menge Diblockcopolymere A-B besteht.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 25 °C, vorzugsweise mindestens 50 °C und insbesondere mindestens 75 °C und für B-Blöcke höchstens 0 °C, insbesondere höchstens -50 °C, wie zum Beispiel höchstens -75 °C, jeweils bestimmt über DSC, Test III) wieder.

Es können auch Diblockcopolymere A-B in Kombination mit den genannten Blockcopolymeren genutzt werden. Es hat sich aber gezeigt, dass ein zu hoher Anteil an Diblockcopolymer zu einer nicht anforderungsgerechten Wärmescherfestigkeit führt. Der Anteil an Diblockcopolymer in der Elastomer-Komponente liegt daher bei höchstens 25 Gew.-%, sehr bevorzugt bei höchstens 20 Gew.-%. Es kann auch komplett auf Diblockcopolymer verzichtet werden. Ein hoher Diblockanteil beispielsweise durch Zugabe eines diblockreichen Vinylaromaterblockcopolymers führt überraschenderweise nicht nur zu einer Verschlechterung der Wärmescherfestigkeit, sondern auch zu einer Abnahme der Klebkraft.

Das mindestens eine Blockcopolymer enthält typischerweise einerseits Polymerblöcke überwiegend gebildet von Vinylaromaten (A-Blöcke), bevorzugt Styrol, und andererseits solche überwiegend gebildet durch Polymerisation von 1,3-Dienen (B-Blöcke) wie zum Beispiel Butadien und Isopren oder einem Copolymer davon. Dabei können die Produkte auch teilweise im Dien-Block hydriert sein. Im Hinblick auf teilhydrierte Derivate sind insbesondere solche Blockcopolymere geeignet, bei denen vor allem etwaige Vinyl-Gruppen, also Wiederholungseinheiten, die in der Seitenkette ungesättigt vorlagen wie 1,2-Polybutadien, 1,2-Polyisopren oder 3,4-Polyisopren, hydriert worden sind, d.h. letztlich hydriert vorliegen. Ein Beispiel für solche teilhydrieren Blockcopolymere sind Polystyrol-Polybutylenbutadien-Blockcopolymere (SBBS).

Vorzugsweise besitzen die Blockcopolymere der Haftklebemassen Polystyrolendblöcke.

Vinylaromaten zum Aufbau des Blocks A umfassen bevorzugt Styrol, $\alpha$-Methylstyrol und/oder andere Styrol-Derivate. Der Block A kann als Homo- oder Copolymer vorliegen. Besonders bevorzugt ist der Block A ein Polystyrol.

Anstelle der bevorzugten Polystyrolblöcke können als Vinylaromaten auch Polymerblöcke auf Basis anderer aromatenhaltiger Homo- und Copolymere (bevorzugt $C_8$- bis $C_{12}$-Aromaten) mit Glasübergangstemperaturen von größer 75 °C genutzt werden wie zum Beispiel $\alpha$-methylstyrolhaltige Aromatenblöcke. Weiterhin können auch gleiche oder unterschiedliche A-Blöcke enthalten sein.

Der Anteil an A-Blöcken in dem mindestens einen Blockcopolymer der Elastomer-Komponente liegt bei mindestens 8 Gew.-% und höchstens 25 Gew.-%.

Bevorzugte konjugierte Diene als Monomere für den Weichblock B sind insbesondere ausgewählt aus der Gruppe bestehend aus Butadien, Isopren, Farnesen, Ethylbutadien, Phenylbutadien, Piperylen, Pentadien, Hexadien, Ethylhexadien und Dimethylbutadien sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teilhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die Peak-Molmasse des mindestens einen Polyvinylaromat-Polydien-Blockcopolymers nach Test IVa liegt bei mindestens 160 000 g/mol, bevorzugt und insbesondere bei Wahl eines Polystyrol-Polybutadien-Blockcopolymers bei mindestens 200 000 g/mol.

(a) <u>Basisformulierung - (ii) Klebharzkomponente:</u>

Unter einem "Klebharz" wird entsprechend dem allgemeinen Fachmannverständnis ein oligomeres oder polymeres Harz verstanden, das die Adhäsion (den Tack, die Eigenklebrigkeit) der Haftklebemasse im Vergleich zu der kein Klebharz enthaltenden, ansonsten aber identischen Haftklebemasse erhöht.

Die Molmasse (nach Test IVb) von Klebharzen liegt üblicherweise zwischen 500 und 5000 g/mol.

Die erfindungsgemäß eingesetzten Klebharze sind vorteilhaft solche, die mit den Weichblöcken der Polyvinylaromat-Polydien-Blockcopolymere der Elastomerkomponente verträglich sind.

Vorzugsweise wird dementsprechend zu mindestens 90 Gew.-%, bevorzugt zu mindestens 95 Gew.-% (bezogen auf die Klebharz-Komponente) ein Klebharz gewählt mit einem DACP (diacetone alcohol cloud point, Test V) von größer +5 °C, bevorzugt größer +10 °C, und kleiner +65 °C (wenn ein Polyisopren-Blockcopolymer im Elastomerteil vorhanden ist), bevorzugt kleiner +50 °C (wenn kein Polyisopren-Blockcopolymer im Elastomerteil vorhanden ist). Ebenso vorzugsweise weist das mindestens eine Klebharz einen MMAP (mixed methylcyclohexane aniline point, Test VI) von mindestens +50 °C, bevorzugt von mindestens +60 °C, auf und von höchstens +100 °C (wenn ein Polyisopren-Blockcopolymer im Elastomerteil vorhanden ist), bevorzugt von höchstens +90 °C (wenn kein Polyisopren-Blockcopolymer im Elastomerteil vorhanden ist). Das mindestens eine Klebharz weist eine Erweichungstemperatur (Ring & Ball, Test VII) von ≥ 80 °C, vorzugsweise ≥ 100 °C, und bevorzugt bis zu 130 °C auf.

Es wurde gefunden, dass als Klebharz für die Haftklebemasse(n) insbesondere unpolare Kohlenwasserstoffharze wie zum Beispiel hydrierte und nicht hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder $\beta$-Pinen und/oder $\delta$-Limonen vorteilhaft eingesetzt werden können. Vorgenannte Klebharze können sowohl allein als auch im Gemisch eingesetzt werden. Bevorzugt werden zu mindestens 90 Gew.-% Kohlenwasserstoffharze oder Polyterpenharze eingesetzt. Klebharze, hydriert oder nicht hydriert, die auch Sauerstoff enthalten, können optional bis zu einem maximalen Anteil von 10 % bezogen auf die Klebharz-Komponente in der Klebemasse eingesetzt werden.

Besonders bevorzugt handelt es sich bei den Klebharzen ausschließlich um Kohlenwasserstoffharze oder Terpenharze oder eine Mischung dergleichen.

(a) <u>Basisformulierung - (iii) Reaktivharzkomponente:</u>

Die der Erfindung zugrunde liegende Aufgabe wird durch Kombination bestimmter Polyvinylaromaten-Polydien-Blockcopolymere mit bestimmten Reaktivharzen gelöst. Ohne an die Theorie gebunden zu sein, kann ein möglicher Erklärungsansatz dafür, dass nur bestimmte Vertreter beider Rohstoffgruppen zu vorteilhaften Klebeigenschaften führen, über selektive Verträglichkeit der Reaktivharze mit den Polyvinylaromat-reichen Domänen erfolgen, wo sie in gehärteter Form den durch Mikrophasenseparation gebildeten Vernetzungszustand auch bei erhöhten Temperaturen stabilisieren.

Dementsprechend enthält die Reaktivharzkomponente zu mindestens 70 Gew.-% mindestens ein Reaktivharz auf Basis eines cyclischen Ethers mit einem dispersen Anteil des Hansen-Parameters, $\delta_D$; von 17,82 bis 17,50 MPa$^{1/2}$, vorzugsweise 17,80 bis 17,70 MPa$^{1/2}$. Dabei unterscheidet sich der disperse Anteil des Hansen-Parameter, $\delta_D$, des Reaktivharzes vorzugsweise um höchstens 2 MPa$^{1/2}$ vom dispersen Anteil des Hansen-Parameters, $\delta_D$, des Polyvinylaromaten des mindestens einen Polyvinylaromat-Polydien-Blockcopolymers.

Der Löslichkeitsparameter $\delta$ im dreidimensionalen Löslichkeitsraum nach Hansen ist folgendermaßen definiert (Eric A.Grulke in "Polymer Handbook", 3. Auflage, Kapitel VII, S. 519- 559):

$$\delta = \left(\delta_D{}^2 + \delta_P{}^2 + \delta_H{}^2\right)^{1/2},$$

wobei

- $\delta_D$ die Anziehung durch spontane Polarisation eines Teilchens und dadurch induzierte Dipole in benachbarten Teilchen beschreibt (vgl. London-Dispersion),

- $\delta_P$ sich auf die Debye-Anziehung permanenter Dipole bezieht, und

- $\delta_H$ spezifische Wechselwirkungen wie Wasserstoffbrückenbindungen oder Säure-Baseninteraktionen beschreibt.

Berechnungen zum Hansen-Parameter werden erfindungsgemäß mittels der Software HSPiP software (http://hansen-solubility.com) durchgeführt. Diese verwendet einen Gruppenbeitragsmethoden-Ansatz auf Basis der Funktionseinheiten des Moleküls.

Bevorzugt sind Reaktivharze auf Basis eines cyclischen Ethers für die thermische und/oder strahlenchemische Härtung, also über Photoinitiatoren. Das Reaktivharz ist kationisch härtbar. Bei den Reaktivharzen auf Basis cyclischer Ether handelt es sich vorzugsweise um Epoxide, also Verbindungen, die mindestens eine Oxiran-Gruppe tragen, oder Oxetane. Besonders bevorzugt sind Epoxide. Die cyclischen Ether sind typischerweise aliphatischer oder cycloaliphatischer Natur, wobei cycloaliphatische Epoxide besonders bevorzugt sind. Unter einem cyclischen Ether cycloaliphatischer Natur ist erfindungsgemäß typischerweise gemeint, dass der cyclische Ether an den Cycloaliphat anelliert ist. Einsetzbare Reaktivharze können monofunktionell, difunktionell, trifunktionell, tetrafunktionell oder höher funktionell bis zu polyfunktionell gestaltet sein, wobei sich die Funktionalität auf die cyclische Ethergruppe bezieht. Besonders bevorzugt sind Diepoxide. Bevorzugte Beispiele, ohne sich einschränken zu wollen, sind 3,4-Epoxycyclohexylmethyl-3',4'-epoxycyclohexancarboxylat (EEC) und Derivate. Reaktivharze können in ihrer monomeren oder auch dimeren, trimeren, usw. bis hin zu ihrer oligomeren Form eingesetzt werden. Sehr bevorzugt wird EEC eingesetzt.

Untersuchungen haben gezeigt, dass die Löslichkeitseigenschaft von (3,4-Epoxycyclohexyl)methyl-3,4-epoxycyclohexylcarboxylat besonders vorteilhaft für die Einbettung in die Styrol-Domänen des Synthesekautschuks ist. Tabelle 1 zeigt die Hansen-Parameter von Polystyrol und verschiedener Diepoxide, sowie die Differenz $\Delta$ der Delta-Werte der Hansenparameter der Diepoxide im Vergleich zu Polystyrol.

Tabelle 1: Hansenparameter von Polystyrol und verschiedenen Diepoxiden und Delta-Werte hierzu.

| | $\delta_D$ | $\delta_P$ | $\delta H$ | Differenz zu Polystyrol | | |
|---|---|---|---|---|---|---|
| | | | | $\Delta\delta_D$ | $\Delta\delta_P$ | $\Delta\delta_H$ |
| Polystyrol | 18,7 | 0,6 | 2,1 | | | |
| (3,4-Epoxycyclohexyl)methyl-3,4-epoxycyclohexylcarboxylat | 17,74 | 6,46 | 5,56 | 0,96 | -5,86 | -3,46 |
| Neopentylglycoldiglycidylether | 17,64 | 6,99 | 7,01 | 1,06 | -6,39 | -4,91 |
| Dicyclopentadiendiepoxid | 17,84 | 5,83 | 3,71 | 0,86 | -5,23 | -1,61 |

(fortgesetzt)

| | $\delta_D$ | $\delta_P$ | $\delta H$ | Differenz zu Polystyrol | | |
|---|---|---|---|---|---|---|
| Perhydrobisphenol A diglycidylether | 17,42 | 5,66 | 4,05 | 1,28 | -5,06 | -1,95 |

Die Vernetzung der cycloaliphatischen Epoxide in der Styrol Domäne nimmt in Abstand vom Ideal des 3,4-Epoxycyclohexyl)methyl 3,4-epoxycyclohexylcarboxylat ab. Das bedeutet, dass die Kohäsion der Muster abnimmt.

Aromatische Epoxidharze sind im Zusammenhang mit der gestellten Aufgabe überraschenderweise ungeeignet, um sich in der Styrol Domäne einzulagern und bilden eine dritte Phase in dem SBC-Epoxyblend. Dies kann aus AFM-Bildern geschlossen werden und zeigt sich in einer starken Trübung des Musters. Das Ergebnis ist besonders überraschend hinsichtlich der Blendbildung, da man erwarten könnte, dass aromatische Epoxide besonders gut verträglich mit der aromatischen Styroldomäne wären und daher im Sinne der Aufgabenstellung sich positiv auswirken sollten. Dies konnte jedoch nicht gezeigt werden.

Gemische von Reaktivharzen untereinander aber auch mit anderen co-reaktiven Verbindungen wie Alkoholen (monofunktionell oder mehrfach funktionell) oder Vinylethern (monofunktionell oder mehrfach funktionell) sind ebenfalls möglich.

(b) Initiator für die kationische Härtung des mindestens einen Reaktivharzes:

Die erfindungsgemäße Haftklebemasse enthält zudem Initiator, auch Aktivator genannt, ohne den die Härtung des Reaktivharzes unter wirtschaftlich sinnvollen Bedingungen nicht möglich ist. Der Initiator liegt typischerweise in einer Menge von 0,1 bis 5 Gew.-% vor, bezogen auf die Menge an Reaktivharzkomponente.

Der Initiator ist typischerweise ausgewählt aus thermisch aktivierbaren Initiatoren für die Initiierung einer kationischen Härtung, Photoinitiatoren, d.h. strahlungsaktivierbaren Initiatoren wie insbesondere UV Initiatoren, für die Initiierung einer kationischen Härtung, sowie Mischungen von diesen. Derartige Initiatoren sind dem Fachmann bekannt. Der Anteil der thermisch aktivierbarer Initiatoren in Bezug auf die Reaktivharzkomponente liegt dabei vorzugsweise bei mindestens 0,2 Gew.-% und höchstens 4,0 Gew.-% und bevorzugter bei mindestens 0,3 Gew.-% und höchstens 2,5 Gew.-%. Der Anteil an strahlungsaktivierbaren Initiatoren in Bezug auf das Reaktivharz liegt dabei vorzugsweise bei mindestens 0,2 Gew.-% und höchstens 5 Gew.-% und bevorzugter bei mindestens 0,5 Gew.-% und höchstens 4 Gew.-%.

Die Auswahl geeigneter thermischer Initiatoren, sofern solche zum Einsatz kommen, für die kationische Härtung der Reaktivharze stellt eine besondere Herausforderung dar. Die Temperatur, die zur Aktivierung des thermischen Initiators erforderlich ist, sollte in einem Bereich liegen, in dem die Klebemasse in ausreichend kurzer Zeit gehärtet werden kann. Insofern ist sie auf das für die Selbstklebebänder zum Einsatz kommende Herstellverfahren abzustimmen.

Dies kann insbesondere durch lösemittelbasierende Beschichtungen der Klebeformulierung erfolgen. Der thermisch aktivierbare Initiator für die kationische Härtung sollte vorteilhafter Weise im Temperaturbereich des Trocknungsprozesses der lösemittelhaltigen Beschichtung zur Härtung des Reaktivharzes führen. Die Aktivierungstemperatur sollte dann bei höchstens 150 °C liegen, bevorzugt sogar bei höchstens 100 °C.

Eine Reihe thermisch aktivierbarer Initiatoren für die kationische Härtung von z. B. Epoxiden sind in der Vergangenheit beschrieben worden. In diesem Zusammenhang wird oft auch der Begriff (Härtungs-)katalysator statt Initiator verwendet. Eine Vielzahl gängiger Härtungssysteme für Epoxide ist jedoch im Sinne der vorliegenden Erfindung typischerweise nicht geeignet. Hierzu zählen $BF_3$-Amin-Komplexe, Anhydride, Imidazole, Amine, DICY, Dialkylphenylacylsulfoniumsalze, Triphenylbenzylphoshoniumsalze und Amin-blockierte Phenylsulfoniumsäuren. Bei vielen dieser Härtungssysteme lässt sich die Aktivierungs- bzw. Härtungscharakteristik nicht auf das Herstellverfahren für die Selbstklebebänder in geeigneter Form abstimmen. So ist beispielsweise die Topfzeit nicht ausreichend oder die erforderliche Härtungsdauer oder das anwendungstechnische Leistungsprofil wird nicht erreicht.

Im Sinne der vorliegenden Erfindung einsetzbare thermisch aktivierbare Initiatoren für eine kationische Härtung von cyclische Ethern sind insbesondere Pyridinium-Salze wie N-Benzylpyridinium-Salze oder Benzylpyridinium-Salze, Ammonium-Salze wie Anilinium-Salze (z.B. N-Anisylmethyl-N,N-dimethylanilinium-Salz), Sulfonium-Salze wie Cyclohexyldiphenylsulfonium-Salz, Dicyclopentenyldipropylsulfonium-Salz, p-Methoxybenzyltetrahydrothiophenium-Salz, Cyclopentyldiphenylsulfoniumsalz oder insbesondere Thiolanium-Salz, Metallsalztriflate wie Triflate des Calciums, des Zinks, des Aluminiums, der seltenen Erden oder der Lanthanoide oder Mischungen davon. Sehr vorteilhaft sind N-Benzylpyridinium-Salze und Benzylpyridinium-Salze, wobei Aromaten z. B. mit Alkyl- Alkoxy-, Halogen- oder Cyano-Gruppen substituiert sein können. J. Polym. Sci. A, 1995, 33, 505ff, US 2014/0367670 A1, US 5,242,715, J. Polym. Sci. B, 2001, 39, 2397ff, EP 393893 A1, Macromolecules, 1990, 23, 431ff, Macromolecules, 1991, 24, 2689, Macromol. Chem. Phys., 2001, 202, 2554ff, WO 2013/156509 A2 und JP 2014/062057 A1 nennen entsprechende Verbindungen, die im Sinne dieser Erfindung bevorzugt einsetzbar sind. Von den kommerziell erhältlichen Initiatorsystemen seien als Beispiele für sehr vorteilhaft einsetzbare Verbindungen San-Aid SI 60 L, San-Aid SI 80 L, San-Aid SI 100 L, San-Aid SI 35 110 L, San-Aid B2A, San-Aid B3A, San-Aid B3 der Firma Sanshin, Opton CP-66 und Opton CP-77 der Firma Adeka, UVC 511, UVC 522, UVC 531, UVC 542, UVC 560 der Firma Synlab GmbH und K-Pure TAG 2678, K-Pure CXC 1612, K-Pure CXC 1613 und K-Pure CXC 1614 der Firma King Industries genannt. Sehr vorteilhaft einsetzbar sind zudem Lanthanoidtriflate wie Samarium-III-Triflat, Ytterbium-III-Triflat, Erbium-III-Triflat, Dysprosium-III-Triflat, die bei Sigma Aldrich erhältlich sind, und Lanthan-III-Triflat, das bei Alfa Aesar erhältlich ist. Zu geeigneten Anionen für die einsetzbaren Initiatoren zählen Hexafluoroantimonat, Hexafluorophosphat, Hexafluoroarsenat, Tetrafluoroborat und Tetra(pentafluorophenyl)borat sowie Triflat. Zudem einsetzbare sind Anionen nach JP 2012-056915 A1 und EP 393893 A1. Dem Fachmann sind weitere Systeme bekannt, die ebenfalls erfindungsgemäß einsetzbar sind.

Thermisch aktivierbare Initiatoren für die kationische Härtung werden unkombiniert oder als Kombination von zwei oder mehreren thermisch härtbaren Initiatoren eingesetzt. Vorteilhaft im Sinne der vorliegenden Erfindung sind thermisch aktivierbare Initiatoren, die Aktivierungstemperatur von mindestens 25 °C und höchstens 200 °C, bevorzugt von mindestens 50 °C und höchstens 150 °C aufweisen, bei der eine kationische Härtung der Reaktivharze gestartet werden kann. Die Aktivierungsdauer kann dabei bei 15s oder mehr und 15 min oder weniger liegen, auch wenn noch kürzere oder noch längere Aktivierungszeiten nicht ausgeschlossen sind. Der Härtungsprozess kann auch nach der Aktivierungsdauer weiter ablaufen.

In einer vorteilhaften Auslegung der Erfindung ist die Härtungsreaktion des Klebebandes zum Zeitpunkt der Laminierung im Wesentlichen im Hinblick auf den erreichbaren Umsatz der Härtungsreaktion abgeschlossen. Es ist auch möglich, dass der Härtungsprozess zum Zeitpunkt der Laminierung noch nicht im Hinblick auf den erreichbaren Umsatz der Härtungsreaktion abgeschlossen ist.

Als Photoinitiator, d.h. strahlungsaktivierbarer Initiator, können beispielsweise solche Verbindungen eingesetzt werden, die unterhalb von 350 nm UV-Licht absorbieren und eine kationische Härtung erlauben, wobei der Photoinitiator insbesondere ausgewählt ist aus Sulfonium-, Iodonium-, Metallocen-basierenden Photoinitiatoren und einer Mischung davon. Besonders bevorzugt sind Sulfonium-basierende Photoinitiatoren. Als Beispiele für Sulfonium-basierende Kationen sei auf die Ausführungen in US 6,908,722 B1 (insbesondere Spalten 10 bis 21) verwiesen. Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amide und Tris-(trifluoromethylsulfonyl)-methide genannt. Ferner sind insbesondere für Iodonium-ba-sierende Initiatoren auch Chlorid, Bromid oder Iodid als Anionen denkbar, wobei aber Initiatoren, die im Wesentlichen frei von Chlor und Brom sind, bevorzugt sind. Konkreter zählen zu den einsetzbaren Systemen Sulfonium-Salze (siehe zum Beispiel US 4,231,951 A, US 4,256,828 A, US 4,058,401 A, US 4,138,255 A und US 2010/063221 A1) wie Triphenyl-sulfoniumhexafluoroarsenat, Triphenylsulfoniumhexafluoroborat, Triphenylsulfoniumtetrafluoroborat, Triphenylsulfo-niumtetrakis-(pentafluoro-benzyl)-borat, Methyldiphenylsulfoniumtetrafluoroborat, Methyldiphenylsulfonium-tetrakis-(pentafluorobenzyl)-borat, Dimethylphenylsulfoniumhexafluorophosphat, Triphenylsulfoniumhexafluorophosphat, Tri-phenylsulfoniumhexafluoroantimonat, Diphenylnaphthylsulfoniumhexafluoroarsenat, Tritolylsulfoniumhexafluorophos-phat, Anisyldiphenylsulfoniumhexafluoroantimonat, 4-Butoxyphenyldiphenylsulfoniumtetrafluoroborat, 4-Butoxyphenyl-diphenylsulfoniumtetrakis- (pentafluorobenzyl)-borat, 4-Chlorphenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxy-phenyl)- sulfoniumhexafluorophosphat, Di-(methoxysulfonylphenyl)-methylsulfoniumhexa-fluoroantimonat, Di-(methoxynaphthyl)-methylsulfoniumtetrafluoroborat, Di-(methoxynaphthyl)-methylsulfoniumtetrakis-(pentafluoro-benzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(penta-fluorophenyl)-borat, Tris(dodecylphenyl)-sulfoniumtetrakis-(3,5-bis- trifluoromethylphenyl)-borat, 4-Acetamidphenyldiphenylsulfoniumtetrafluoroborat, 4-Acetamidphenyl-diphenylsulfoniumtetrakis-(pentafluorobenzyl)-borat, Dimethylnaphthylsulfo-niumhexafluorophosphat, Trifluoromethyldiphenylsulfoniumtetrafluoroborat, Trifluoromethyldiphenyl-sulfoniumtetraki-s-(pentafluorobenzyl)-borat, Phenylmethylbenzylsulfoniumhexafluorophosphat, 5-Methylthianthreniumhexafluorophosphat, 1-O-Phenyl-9,9- dimethylthioxantheniumhexafluorophosphat, 1-O-Phenyl-9-oxothioxantheniumtetrafluoroborat, 1-O-Phenyl-9-oxothioxantheniumtetrakis-(pentafluorobenzyl)-borat, 5-Methyl-10-oxothi-anthreniumtetrafluoroborat, 5-Methyl-10-oxothianthreniumtetrakis-(pentafluorobenzyl)-borat und 5-Methyl-10, 10-dioxothianthreniumhexafluorophos-phat, Iodonium-Salze (siehe zum Beispiel US 3,729,313 A, US 3,741,769 A, US 4,250,053 A, US 4,394,403 A und US 2010/063221 A1) wie Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluoro-phosphat, 3, 5-Dimethyl-pyrazolyl-4-phenyliodoniumhexafluorophosphat, Diphenyliodoniumhexafluoroantimonat, 2 ,2'-Diphenyliodoniumtetrafluoroborat, Di-(2 ,4-dichlorphenyl)-iodoniumhexafluoro-phosphat, Di-(4-bromphenyl)-iodoniumhexafluorophosphat, Di-(4-methoxyphenyl)-iodoniumhexafluoro-phosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluoro-phosphat, Diaryliodoniumtristrifluormethylsulfonylmethid wie Di phenyliodoniumhexafluoroantimonat, Diaryliodoniumtetrakis-(pentafluorophenyl)-borat wie Diphenyliodoniumtetrakis-(pentafluorophenyl)-borat, (4-n-Desiloxyphenyl)-phenyliodoniumhexafluoroantimonat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]- phenyl-iodoniumtetrakis(pentafluorophenyl)-borat, Bis-(4-tert-butylphenyl)-iodoniumhexafluoro-antimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethyl-sulfonat, Di-(dodecylphenyl)-iodoniumhexafluoroantimonat, Di-(dodecylphenyl)-iodonium-triflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bissuccinimidodiphenyliodoniumbisulfat, 3-Nitrodiphenyl-iodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5- bis-trifluoro-methylphenyl)-borat und (Tolylcumyl)-iodoniumtetrakis-(pentafluorophenyl)-borat, und Ferrocenium-Salze (siehe zum Beispiel EP 542 716 B1) wie η5-(2,4-cyclopentadien-1-yl)-[( 1,2,3,4,5,6, 9)-( 1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP- 172 der Firma Adeka, San-Aid SI-45L, San-Aid SI- 60L, San-Aid SI-SOL, San-Aid SI-1 OOL, San- Aid SI-110L, San-Aid SI-150L und San-Aid SI-180L der Firma Sanshin Chemical, SarCat CD- 1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI- 2758 der Firma Nippon Soda, Omnicat 320, Omnicat 430, Omnicat 432, Omnicat 440, Omnicat 445, Omnicat 550, Omnicat 550BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI- 110, BBI-201, BBI, 301, BI-105, DPI-105, DPI-106, DPI-109, DPI- 201, DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS- 109, MDS-205, MPI-103, MPI-105, MPI-106, MPI-109, DS-100, DS-101, MBZ-101, MBZ- 201, MBZ-301, NAI-20 100, NAI-101, NAI-105, NAI-106, NAI-109, NAI-1002, NAI-1003, NAI- 1004, NB-101, NB-201, NDI-101, NDI- 105, NDI-106, NDI-109, PAI-01, PAI-101, PAI-106, P AI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI- 625, Kayarad 220 und Kayarad 620, PCI-061 T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF, UV 387C, UV 1240, UV 1242, UV 1244, UV 1707, UV 1708, UV 2257 der Firma Synlab. Dem Fachmann sind weitere Systeme bekannt, die ebenfalls erfindungsgemäß einsetzbar sind.

Photoinitiatoren können unkombiniert oder als Kombination von zwei oder mehreren Photoinitiatoren und/ oder thermischen Initiatoren eingesetzt werden. Vorteilhaft sind Photoinitiatoren, die eine Absorption bei kleiner 350 nm und vorteilhaft bei größer als 250 nm aufweisen. Initiatoren, die oberhalb 350 nm absorbieren, beispielsweise im Bereich violetten Lichts, sind ebenfalls einsetzbar. Sulfonium-basierende Photoinitiatoren werden besonders bevorzugt eingesetzt, da sie eine vorteilhafte UV-Absorptionscharakteristik aufweisen. Die Aktivierungsdauer liegt dabei üblicherweise bei mehr als 1s und typischerweise bei weniger als 5 min, auch wenn noch kürzere oder noch längere Aktivierungszeiten nicht ausgeschlossen sind. Der Härtungsprozess kann auch nach der Aktivierungsdauer weiter ablaufen. In einer vorteilhaften Ausführungsform der Erfindung ist die Härtungsreaktion des Klebebandes zum Zeitpunkt der Laminierung im Wesentlichen im Hinblick auf den erreichbaren Umsatz der Härtungsreaktion abgeschlossen. Es ist auch möglich, dass der Härtungsprozess zum Zeitpunkt der Laminierung noch nicht im Hinblick auf den erreichbaren Umsatz der Härtungsreaktion abgeschlossen ist. Die Aktivierung des Photoinitiators erfolgt vorteilhaft im Anschluss an den Trocknungsprozess, sofern eine lösemittelhaltige Formulierung beschichtet wird.

(c) Optionale weitere Bestandteile:

Bei der Auswahl zusätzlicher Einsatzmaterialien wird darauf geachtet, dass keine Bestandteile und chemische Baugruppen den Härtungsprozess der Reaktivharzkomponente so stark beinträchtigen, dass die anforderungsgerechte Leistungsfähigkeit der Formulierung nach dem Härtungsprozess nicht gewährleistet ist. So wird insbesondere auf (starke) Nukleophile oder basisch wirkende Substanzen verzichtet.

Optional kann beispielsweise mindestens ein Weichmacher eingesetzt werden. Dabei handelt es sich insbesondere um Weichharze und ganz besonders bevorzugt bei Raumtemperatur flüssige Polyterpen- oder Kohlenwasserstoffharze, vorzugsweise mit einem Anteil von 1 bis 5 Gew.-% bezogen auf das Gesamtgewicht der Gesamthaftklebemasse.

Als Additive können optional typischerweise genutzt werden:

- primäre Antioxidantien wie zum Beispiel sterisch gehinderte Phenole,
  vorzugsweise mit einem Anteil von 0,2 bis 1 Gew.-% bezogen auf das Gesamtgewicht der Gesamthaftklebemasse

- sekundäre Antioxidantien, wie zum Beispiel Phosphite, Thioester oder Thioether, vorzugsweise mit einem Anteil von 0,2 bis 1 Gew.-% bezogen auf das Gesamtgewicht der Gesamthaftklebemasse

- Prozessstabilisatoren wie zum Beispiel C-Radikalfänger,
  vorzugsweise mit einem Anteil von 0,2 bis 1 Gew.-% bezogen auf das Gesamtgewicht der Gesamthaftklebemasse

- Lichtschutzmittel wie zum Beispiel UV-Absorber oder sterisch gehinderte Amine, vorzugsweise mit einem Anteil von 0,2 bis 1 Gew.-% bezogen auf das Gesamtgewicht der Gesamthaftklebemasse

- Verarbeitungshilfsmittel,
  vorzugsweise mit einem Anteil von 0,2 bis 1 Gew.-% bezogen auf das Gesamtgewicht der Gesamthaftklebemasse sowie

  gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine,
  vorzugsweise mit einem Anteil von 0,2 bis 10 Gew.-% bezogen auf das Gesamtgewicht der Gesamthaftklebemasse.

In einer Ausführungsform der vorliegenden Erfindung enthält die Haftklebemasse auch weitere Additive, beispielhaft, aber nicht einschränkend erwähnt seien kristalline oder amorphe Oxide, Hydroxide, Carbonate, Nitride, Halogenide, Carbide oder gemischte Oxid-/Hydroxid-/Halogenidverbindungen des Aluminiums, Siliciums, Zirkoniums, Titans, Zinns, Zinks, Eisens oder der (Erd)alkalimetalle. Hierbei handelt es sich im Wesentlichen um Tonerden zum Beispiel Aluminiumoxide, Boehmit, Bayerit, Gibbsit, Diaspor und ähnliche. Ganz besonders geeignet sind Schichtsilicate wie beispielsweise Bentonit, Montmorillonit, Hydrotalcit, Hectorit, Kaolinit, Boehmit, Glimmer, Vermiculit oder deren Mischungen. Aber auch Ruße oder weitere Modifikationen des Kohlenstoffs, etwa Kohlenstoffnanoröhrchen. Möglich sind auch Kieselsäuren, vorteilhaft gefällte, mit Dimethyldichlorsilan oberflächenmodifizierte Kieselsäuren.

Die Klebemassen können auch mit Farbstoffen oder Pigmenten eingefärbt sein. Die Klebemassen können weiß, schwarz oder farbig sein.

Die Haftklebemasse für die Haftklebemasseschicht kann schäumbar sein beziehungsweise kann geschäumt vorliegen. Zu diesem Zweck können Schäumungsmittel in der Rezeptur vorgesehen sein. Sehr bevorzugt werden als Schäumungsmittel Mikroballons in expandierter oder expandierbarer Form genutzt. Es können jedoch auch chemische Schäumungsmittel allein oder in Kombination mit anderen Schäumungsmitteln eingesetzt werden. Haftklebemassen können auch physikalisch, also durch Einarbeitung gasförmiger oder überkritisch fluider Stoffe oder Stoffgemische, geschäumt werden oder sein.

Sofern Schäumung vorgesehen ist, erfolgt diese insbesondere durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Nouryon.

Unexpandierte Mikroballontypen sind auch polymergebunden als Masterbatch zum Beispiel in Ethylvinylacetat mit einer Mikroballonkonzentration von ca. 65 Gew.-% einsetzbar. Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel DE (Dry Expanded) von der Firma Nouryon kommerziell erhältlich.

Erfindungsgemäß bevorzugt weisen mindestens 90 % aller von Mikroballons gebildeten Hohlräume einen maximalen Durchmesser von 20 bis 75 $\mu$m, stärker bevorzugt von 25 bis 65 $\mu$m, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Klebemasse liegt zwischen 0,5 Gew.-% und 5 Gew.-%, ganz insbesondere zwischen 1,0 und 2,5 Gew.-% jeweils bezogen auf die Gesamtzusammensetzung der Gesamthaftklebemasse. Die Angaben beziehen sich auf unexpandierte Mikroballons.

Eine erfindungsgemäß genutzte, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Haftklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die Summe der optional einsetzbaren weiteren Einsatzstoffe in Bezug auf das Gesamtgewicht der Gesamthaftklebemasse beträgt bis etwa 20 Gew.-%, kann aber auch bei bis zu 15 Gew.-% oder bei bis zu 10 Gew.-% oder bei bis zu 5 Gew.-% liegen.

Die vorliegende Erfindung umfasst auch eine gehärtete Haftklebemasse erhältlich oder erhalten durch Härten einer wie vorstehend beschriebenen Haftklebemasse.

Klebebänder:

Die vorliegende Erfindung umfasst auch ein Klebeband, das mindestens eine Schicht einer erfindungsgemäßen Haftklebemasse oder gehärteten Haftklebemasse wie jeweils vorstehend beschrieben umfasst.

In einer bevorzugten Ausführungsform ist das Klebeband ein Transferklebeband, das vorzugsweise aus einer einzigen Schicht einer Haftklebemasse oder gehärteten Haftklebemasse wie jeweils vorstehend beschrieben besteht.

In einer alternativ bevorzugten Ausführungsform umfasst das Klebeband mindestens einen Träger, d.h. Permanentträger, auf dem mindestens einseitig, vorzugsweise beidseitig eine Schicht einer Haftklebemasse oder gehärteten Haftklebemasse wie jeweils vorstehend beschrieben aufgebracht ist. Bei dem Träger handelt es sich vorzugsweise um einen Schaumträger, insbesondere um einen Polyolefin-, Polyurethan- oder Polyacrylat-Schaumträger. Weitere bevorzugte Permanentträger sind Folienträger, die insbesondere thermoplastische Polymere wie Polyester oder Polypropylen enthalten. Solche Permanentträger können mono- oder biaxial orientiert sein.

In den Klebebändern können die äußeren, frei liegenden Flächen der außenliegenden Klebemassenschichten mit beidseitig antiadhäsiv beschichteten Materialien ausgerüstet sein wie ein Trennpapier oder eine Trennfolie, auch Liner genannt. Ein Liner (Trennpapier, Trennfolie) ist nicht Bestandteil eines Klebebandes, sondern nur ein Hilfsmittel zu dessen Herstellung, Lagerung und/oder für die Weiterverarbeitung durch Stanzen. Darüber hinaus ist ein Liner im Gegensatz zu einem Klebebandträger nicht fest mit einer Klebstoffschicht verbunden.

Vorzugsweise weisen alle Schichten im Wesentlichen die Form eines Quaders auf. Weiter vorzugsweise sind alle Schichten vollflächig miteinander verbunden. Diese Verbindung kann durch die Vorbehandlung der Trägeroberflächen optimiert werden.

Der allgemeine Ausdruck "Klebeband" (Haftklebeband), umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten. Der Haftklebestreifen weist somit eine Längsausdehnung (x-Richtung) und eine Breitenausdehnung (y-Richtung) auf. Der Haftklebestreifen weist auch eine senkrecht zu beiden Ausdehnungen verlaufende Dicke (z-Richtung) auf, wobei die Breitenausdehnung und Längsausdehnung um ein Vielfaches größer sind als die Dicke. Die Dicke ist über die gesamte durch Länge und Breite bestimmte Flächenausdehnung des Haftklebestreifens möglichst gleich, vorzugsweise exakt gleich.

Das erfindungsgemäße Klebeband liegt insbesondere in Bahnform vor. Unter einer Bahn wird ein Objekt verstanden, dessen Länge (Erstreckung in x-Richtung) um ein Vielfaches größer ist als die Breite (Erstreckung in y-Richtung) und die Breite entlang der gesamten Länge in etwa vorzugsweise genau gleich bleibend ausgebildet ist.

Erfindungsgemäße Formulierungen zeichnen sich durch gute Klebkraft bei gesteigerter Wärmescherfestigkeit aus und eignen sich damit besonders für Haftklebebänder, die in Anwendungen mit solchen Anforderungen zum Einsatz kommen sollen. Dabei handelt es sich beispielsweise um Anwendungen im Innen- und Außenbereich eines Automobils, Elektronikanwendungen für Geräte, die in heißen Ländern verkauft werden, und die Verwendung als Bauklebebänder, die starker Wärme im Sommer ausgesetzt werden. Besonders vorteilhaft sind die Klebebänder, wenn sie folgendes Leistungsprofil erreichen (Tabelle 2):

Tabelle 2: Bevorzugtes Leistungsprofil der Klebebänder.

| | | | Erforderlicher Leistungsbereich | Bevorzugter Leistungsbereich |
|---|---|---|---|---|
| SAFT | Test I | Wärmescherfestigkeit | min. 150 °C | min. 170 °C |
| Klebkraft | Test II | Verklebungsfestigkeit | min. 4 N/cm | min. 7 N/cm |

Herstellverfahren:

Die vorliegende Erfindung betrifft auch ein Verfahren zur Herstellung eines erfindungsgemäßen Klebebands, bei dem eine lösungsmittelhaltige Klebemasse beschichtet und getrocknet wird und die thermische Härtung der Klebemasse während des Trocknungsprozesses erfolgt oder initiiert wird. Die thermische Härtung oder deren Initiierung erfolgt somit bevorzugt während des Trocknungsprozesses. Alternativ kann die Härtung durch Strahlung wie insbesondere UV-Strahlung erzielt werden. Die UV-Initiierung kann unabhängig von der Trocknung erfolgen. Der Fachmann weiß, dass jeweils ein für die thermische oder photochemische Härtung geeigneter Initiator einzusetzen ist.

Das Verfahren zur Herstellung eines Klebebands ist somit bevorzugt lösungsmittelbasierend. Vorzugsweise wird mindestens ein Lösungsmittel verwendet, das bei einem Druck von 1013 mbar einen Siedepunkt von mindestens 75 °C, vorzugsweise mindestens 90 °C aufweist und zudem einen Hildebrand-Parameter von größer als 7,5 $cal^{1/2}$ $cm^{-3/2}$ und kleiner als 10 $cal^{1/2}$ $cm^{-3/2}$ aufweist.

Als Lösungsmittel kann weiterhin vorzugsweise eine Mischung aus polaren Lösungsmitteln wie z.B. Ethylacetat, Methylethylketon (MEK), Methylisobutylketon (MIBK), 2-Pentanon und/oder Butylacetat, und unpolaren Lösungsmitteln wie Toluol, Methylcylohexan und/oder Benzin eingesetzt werden. Bei der Auswahl des Lösungsmittels für die Herstellung der lösungsmittelbasierenden Klebemasse vor der Beschichtung werden die dem Fachmann üblicherweise bekannten Konzepte zur Auswahl angewandt.

Auch wenn lösemittelbasierende Herstellverfahren Vorteile bieten, so sind aber auch lösungsmittelfreie Herstellverfahren denkbar, insbesondere solche, die kontinuierliche Mischaggregate wie Extruder umfassen.

**Beispiele:**

In den (Vergleichs)Beispielen sind mit Prozentangaben Gew.-% gemeint, wenn nicht anders angegeben. Die Formulierungsbestandteile addieren sich jeweils auf 100 Gew.-%, wobei Lösungsmittel unberücksichtigt bleibt. Angaben zur eingesetzten Initiatormenge beziehen sich abweichend davon auf die Menge an eingesetzter Reaktivharzkomponente.

Rohstoffe:

In den (Vergleichs-)Beispielen wurden folgende Rohstoffe eingesetzt (Tabelle 3).

Tabelle 3: In den (Vergleichs)Beispielen eingesetzte Rohstoffe.

| Elastomer-komponente | Europrene Sol T6414 (Versalis) | Polystyrol-Polybutadien-Blockcopolymer | PS-Gehalt: 40 Gew.-% Radial<br>Diblock-Gehalt: 22 Gew.-%<br>$M_P$: 116 000 g/mol |
|---|---|---|---|
| | Globalprene 3522 (LCY) | Polystyrol-Polybutadien-Blockcopolymer | PS-Gehalt: 23 Gew.-% Triblock<br>Diblock-Gehalt: 78 Gew.-%<br>$M_P$:170 000 g/mol |
| | Kraton D1116 (Kraton Performance Polymers) | Polystyrol-Polybutadien-Blockcopolymer | PS-Gehalt: 23 Gew.-%* Radial<br>Diblock-Gehalt 16 Gew.-%<br>$M_p$: 300 000 g/mol |
| | Kraton D1124 (Kraton Performance Polymers) | Polystyrol-Polyisopren-Blockcopolymer | PS-Gehalt: 30 % Radial<br>Diblock-Gehalt: 30 Gew.-%<br>$M_P$: 180 000 g/mol |
| | Kraton D1126 (Kraton Performance Polymers) | Polystyrol-Polyisopren-Blockcopolymer | PS-Gehalt: 19 Gew.-% Radial<br>Diblock-Gehalt: 30 Gew.-%<br>$M_P$: 155 000 g/mol |
| | Kraton HT1200 (Kraton Performance Polymers) | Polystyrol-Polyisopren-Blockcopolymer | PS-Gehalt: 10 Gew.-% Radial<br>Diblock-Gehalt: 15 Gew.-%<br>$M_P$: 658 000 g/mol |

(fortgesetzt)

| | | | |
|---|---|---|---|
| | Polystyrol-Polybutadien-Blockcopolymer | Solprene S416 (Dynasol) | PS-Gehalt: 30 Gew.-% Radial; Diblock-Gehalt <10 Gew.-%; $M_P$: 207 000 g/mol |
| | Polystyrol-Polybutadien-Blockcopolymer | Tufprene 315P (Asahi Kasei) | PS-Gehalt: 20 Gew.-% Triblock; Diblock-Gehalt <5 Gew.-%; $M_P$: 106 000 g/mol |
| | Polystyrol-Polyisopren-Blockcopolymer | Vector 4113 (TSRC) | PS-Gehalt: 15 Gew.-% Triblock; Diblock-Gehalt: 18 Gew.-%; $M_P$: 190 000 g/mol |
| Klebharz-komponente | Alpha-Pinen-Harz | Piccolyte A115 (DRT) | Erweichungspunkt: 115 °C DACP = +35 °C |
| | Vollhydriertes C9-Kohlenwasserstoffharz | Regalite R1090 (Eastman Chemical) | Erweichungspunkt: 90 °C DACP = +55 °C |
| ReaktivharzKomponente | Cycloaliphatisches Diepoxid | 3,4-Epoxycyclohexylmethyl- 3,4-epoxycyclohexancarboxylat (Uvacure 1500, Allnex) | $\delta_D$ = 17,74 MPa$^{0,5}$ |
| | Cycloaliphatisches Diepoxid | Bis-((3,4-Epoxycyclo-hexyl)-methyl)-adipat (Sigma Aldrich) | $\delta_D$ = 17,6 MPa$^{0,5}$ |
| | Cycloaliphatisches Diepoxid | Dicyclopentadiendiepoxid (Sigma Aldrich) | $\delta_D$ = 17,84 MPa$^{0,5}$ |
| | Aliphatisches Diepoxid | 1,5-Hexadiendiepoxid (Sigma Aldrich) | $\delta_D$ = 17,3 MPa$^{0,5}$ |
| | Cycloaliphatisches Diepoxid | Diglycidyl-1,2-cyclo-hexandicarboxylat (Sigma Aldrich) | $\delta_D$ = 17.6 MPa$^{0,5}$ |
| | Aliphatisches Diepoxid | Neopentylglycoldiglycidylether (Sigma Aldrich) | $\delta_D$ = 17,64 MPa$^{0,5}$ |
| | Hydriertes aromatisches Diepoxid | Perhydrobisphenol A diglycidylether (ER15, IPOX) | $\delta_D$ = 17,42 MPa$^{0,5}$ |
| | Aromatisches Diepoxid | 4,4'-Isopropylidendiphenol-Epichlorohydrin (Epikote 828, Hexion Specialty Chemicals) | $\delta_D$ = 18.9 MPa$^{0,5}$ |

(fortgesetzt)

| Härter-Komponente | K-Pure CXC 1613 (King Industries) | Thermischer Initiator (ein Zntriflat), liegt als 25-Gew.-%ige Lösung in 2-Butanol vor Thermischer Initiator | |
|---|---|---|---|
| | p-Methoxybenzyltetrahydrothiopheniumhexafluoroantimonat (UVC 531, Synlab GmbH Friesoithe) | | |
| | Irgacure 290 (BASF SE) | Sulfoniumbasierender Photoinitiator | |
| Weitere Einsatzstoffe | Wingtack 10 (Cray Valley) | $C_5$-Weichharz | |
| | Expancel 920 DUT40 (Nouryon) | Expandierbare Mikroballons | |

<u>Herstellung und Eigenschaften der Klebebandmuster:</u>

Für die Herstellung der Klebebandmuster der Beispiele E1 bis E18 und Vergleichsbeispiele V1 bis V22 wurden jeweils alle erforderlichen Formulierungsbestandteile (wie in Tabelle 3 angegeben) in einem Lösungsmittelgemisch von Ethylacetat/Toluol/Benzin (14 Gew.-%/30 Gew.-%/56 Gew.-%) gelöst. Der Initiator wurde entweder wie angeliefert zugegeben (K-Pure CXC 1613 Lösung) oder in eigens gelöster Form (UVC 531 bzw. Irgacure 290, jeweils als 33 Gew.%-ige Lösung in Methylethylketon), und für 30 min mit einem Propellerrührer eingearbeitet. Der Lösemittelgehalt in der sich ergebenden Lösung betrug jeweils 40 Gew.-%. Anschließend wurde die Lösung jeweils auf eine silikonisierte PET-Folie beschichtet.

Die Muster wurden für 10 min bei Raumtemperatur vorgetrocknet und anschließend für 15 min bei 120 °C getrocknet, wenn nicht anders angegeben. Nach der Trocknung bzw. Trocknung und Schäumung betrug die Klebeschichtdicke der Ausstriche 50 μm (im Rahmen der üblichen Fehlertoleranzen). Nach 24 h wurden die Klebebandmuster bewertet. Details zu den Untersuchungen sind insbesondere im Prüfmethodenteil zu finden.

<u>I: Vergleichsbeispiele V1 bis V22:</u>

a) Rezepturoptimierung:

In den Vergleichsbeispielen V1 bis V10 wurden die eingesetzten Mengen der Bestandteile der Basisformulierung, d.h. der Elastomerkomponente, der Klebharzkomponente und der Reaktivharzkomponente, sowie des Initiators für die kationische Härtung des Reaktivharzes variiert, mit dem Ziel, die Wärmescherfestigkeit (SAFT) und Klebkraft auf Stahl zu optimieren.

Die Zusammensetzung der Klebebänder aus den Vergleichsbeispielen V1 bis V10 und deren Eigenschaften zeigt Tabelle 4.

Tabelle 4: Zusammensetzung und Eigenschaften der Klebebänder aus den Vergleichsbeispielen V1 bis V10. ª Anteil der K-Pure CXC 1613 Lösung in Gew.-% bezogen auf die Menge an Reaktivharz Uvacure 1500.

| Bsp. (Vgl.) | Kraton D1116 (Gew.-%) | GlobalPrene 3522 (Gew.-%) | Piccolyte A115 (Gew.-%) | Uvacure 1500 (Gew.-%) | K-Pure CXC 1613ª | SAFT (°C) | Klebkraft Stahl (N/cm) |
|---|---|---|---|---|---|---|---|
| V1 | 50 | 0 | 50 | 0 | 0 | 139 | 8,4 |
| V2 | 26 | 0 | 54 | 20 | 0 | 98 | 0,8 |
| V3 | 25 | 0 | 65 | 10 | 3 | 103 | 5,7 |
| V4 | 35 | 0 | 53 | 12 | 3 | 127 | 12,55 |
| V5 | 30 | 15 | 40 | 15 | 3 | 129 | 6,8 |
| V6 | 45 | 0 | 48 | 7 | 3 | 132 | 9,3 |
| V7 | 35 | 10 | 40 | 15 | 3 | 134 | 6,5 |
| V8 | 50 | 0 | 50 | 0 | 3 | 140 | 9,6 |
| V9 | 30 | 0 | 35 | 35 | 3 | 210 | 0,1 |
| V10 | 50 | 0 | 30 | 20 | 3 | 213 | 1,7 |

V1 zeigt eine Abmischung ohne Uvacure 1500 und somit ohne Epoxidhärtung. Ein SAFT-Ergebnis von höher als 140 °C kann dabei nicht erreicht werden.

V2 zeigt zudem, dass das Epoxid nicht unter thermischer Autohärtung reagieren kann, da kein Initiator zugegen ist. Das Epoxid härtet nicht aus, daher ist die thermische Stabilität sogar schlechter als bei der Vergleichsrezeptur V1. Das Epoxid fungiert hier als Weichmacher.

V3 bis V7 verdeutlichen insbesondere, dass es hinsichtlich der Anteile der einzelnen Bestandteile nur einen speziellen Korridor gibt, indem sowohl eine akzeptables Klebkraftergebnis als auch eine herausragende thermische Stabilität erreicht werden kann. Alle Ergebnisse bei diesen Rohstoffkombinationen zeigen eine zu geringe Wärmescherfestigkeit.

V8 zeigt, dass der Initiator allein keine Wirkung im Hinblick auf das Erreichen der Leistungsanforderung ausübt.

V9 und V10 zeigen zudem, dass ein zu hoher Anteil an ausgehärtetem Reaktivharz zu einer starken Herabsetzung der Klebkraft führt, so dass das Klebeband den haftklebrigen Charakter verliert.

b) Elastomerscreening:

In den Vergleichsbeispielen V11 bis V15 wurde das ausgewählte Elastomer variiert. Neben 40 Gew.-% des jeweiligen Elastomers wurden dabei jew. 40 Gew.-% Klebharz (Piccolyte A 115), 20 Gew.-% Reaktivharz (Uvacure 1500) und 3 Gew.-% Initiatorlösung (K-Pure CXC 1613 Lösung), bezogen auf die Menge an Uvacure 1500, eingesetzt. Tabelle 5 zeigt das jeweils eingesetzte Elastomer und die SAFT-Temperatur der sich ergebenden Klebebänder. Es ist zudem zusätzlich die SAFT-Temperatur angegeben, die sich beim jeweiligen Weglassen des Reaktivharzes Uvacure 1500 bei der Klebemasseformulierung ergibt (wobei die eingesetzten Mengen der weiteren Bestandteile unverändert bleiben).

Tabelle 5: In den Vergleichsbeispielen V11 bis V15 eingesetzte Elastomere und SAFT-Werte der sich ergebenden Klebebänder. [a] mit Uvacure 1500; [b] ohne Uvacure 1500.

| Bsp. (Vgl.) | Elastomer | Polymertyp | DiblockAnteil (Gew.-%) | PS-Gehalt (Gew.-%) | Architektur | SAFT (°C)[a] | SAFT (°C)[b] |
|---|---|---|---|---|---|---|---|
| **V11** | Solprene S416 | PS-Polybutadien | < 10 | 30 | Radial | 98 | 131 |
| **V12** | Kraton D1126 | PS-Polyisopren | 30 | 19 | Radial | 100 | 104 |
| **V13** | Tufprene 315P | PS-Polybutadien | < 5 | 20 | Linear (Triblock) | 95 | 98 |
| **V14** | Europrene Sol T 6414 | PS-Polybutadien | 22 | 40 | Radial | 97 | 118 |
| **V15** | Kraton D1124 | PS-Polyisopren | 30 | 30 | Radial | 90 | 119 |

V11 bis V15 zeigen, dass es nur einen kleinen Eigenschaftskorridor der Elastomere gibt, in dem eine Epoxidverträglichkeit der Polystyrol-Domänen erreicht werden kann.

c) Epoxid-Screening:

In den Vergleichsbeispielen V16 bis V22 wurde das ausgewählte Epoxid, d.h. Reaktivharz, variiert. Neben 20 Gew.-% des jeweiligen Epoxids wurden dabei jew. 40 Gew.-% Elastomer (Kraton D1116), 40 Gew.-% Klebharz (Piccolyte A 115) und 3 Gew.-% Initiatorlösung (K-Pure CXC 1613 Lösung), bezogen auf die Menge an Epoxid, eingesetzt. Tabelle 6 zeigt das jeweils eingesetzte Epoxid und die SAFT-Temperatur der sich ergebenden Klebebänder.
V16 bis V22 legen dar, dass die Löslichkeit des Epoxids eine wichtige Rolle im Hinblick auf die Wirkung auf das Erreichen der Leistungsanforderung darstellt.

Tabelle 6: In den Vergleichsbeispielen V16 bis V22 eingesetztes Epoxid (Reaktivharz) und SAFT-Werte der sich ergebenden Klebebänder.

| Bsp. (Vgl.) | Epoxid | SAFT (°C) |
|---|---|---|
| **V16** | Bis((3,4-epoxycyclohexyl)methyl)adipat | 118 |
| **V17** | 1,5-Hexadiendiepoxid | 113 |
| **V18** | Diglycidyl-1,2-cyclohexandicarboxylat | 110 |
| **V19** | Neopentylglycoldiglycidylether | 113 |
| **V20** | Dicyclopentadiendiepoxid | 105 |
| **V21** | Perhydrobisphenol A diglycidylether | 98 |
| **V22** | 4,4'-Isopropylidenediphenol-Epichlorohydrin | 108 |

II: Erfindungsgemäße Beispiele E1 bis E18:

a) Erfindungsgemäße Haftklebemassen auf Basis von Polystyrol-Polybutadien-Blockcopolymeren:

Tabelle 7 zeigt die quantitative Zusammensetzung der erfindungsgemäßen Klebebänder aus den Beispielen E1 bis E14, deren Elastomer mit Kraton D1116 jeweils ein Polystyrol-Polybutadien-Blockcopolymer ist, und deren Eigenschaften.

Tabelle 7: Zusammensetzung der erfindungsgemäßen Klebebänder aus den Beispielen E1 bis E14 und deren Eigenschaften. [a] Anteil der K-Pure CXC 1613 Lösung in Gew.-% bezogen auf die Menge an Reaktivharz Uvacure 1500. [b] anstatt 3 Gew.-% K-Pure CXC 1613 Lösung wurden hier 1,5 Gew.-% UVC 531 Lösung eingesetzt, ebenfalls bezogen auf die Menge an Uvacure 1500.

| Bsp. | Kraton D1116 (Gew.-%) | Piccolyte A115 (Gew.-%) | Uvacure 1500 (Gew.-%) | Wingtack 10 (Gew.-%) | K-Pure CXC 1613[a] | SAFT (°C) | Klebkraft (N/cm) |
|---|---|---|---|---|---|---|---|
| E1 | 42 | 45 | 13 | 0 | 3 | 150 | 8,7 |
| E2 | 42 | 40 | 13 | 5 | 3 | 153 | 7,2 |
| E3 | 35 | 45 | 15 | 5 | 3 | 156 | 11,4 |
| E4 | 35 | 50 | 15 | 0 | 3 | 160 | 13,3 |
| E5 | 41 | 40 | 14 | 5 | 3 | 161 | 7,3 |
| E6 | 26 | 54 | 20 | 0 | 3 | 165 | 12,03 |
| E7 | 29,5 | 50 | 20 | 0 | 3 | 183 | 14,3 |
| E8 | 35 | 40 | 20 | 5 | 3 | 196 | 8,7 |
| E9 | 35 | 45 | 20 | 0 | 3 | 200 | 10,2 |
| E10 | 43 | 37 | 20 | 0 | 3 | 221 | 5,6 |
| E11 | 45 | 35 | 20 | 0 | 3 | 240 | 5,0 |
| E12 | 33,5 | 46,5 | 20 | 0 | 3 | 210 | 10,0 |
| E13 | 40 | 40 | 20 | 0 | 3 | 180 | 6,5 |
| E14 | 40 | 40 | 20 | 0 | 1,5[b] | 180 | 6,5 |

Die Beispiele E1 bis E14 zeigen insbesondere, dass ein erfindungsgemäßer Anteil an erfindungsgemäßem Reaktivharz in einer Polystyrol-Polybutadien-Blockcopolymer-Matrix nach der Härtung zu einer hohen Wärmescherfestigkeit führt, gleichzeitig aber auch die Anforderungen an eine gute Klebkraft erfüllt.

b) Erfindungsgemäße Haftklebemassen auf Basis von Polystyrol-Polyisopren-Blockcopolymeren:

Tabelle 8 zeigt die quantitative Zusammensetzung der erfindungsgemäßen Klebebänder aus den Beispielen E15 bis E16, deren Elastomer mit Vector 4113 jeweils ein Polystyrol-Polyisopren-Blockcopolymer ist, und deren Eigenschaften.

Tabelle 8: Zusammensetzung der erfindungsgemäßen Klebebänder aus den Beispielen E15 sowie E16 und deren Eigenschaften. [a] Anteil an K-Pure CXC 1613 Lösung in Gew.-% bezogen auf die Menge an Uvacure 1500.

| Bsp. | Vector 4113 (Gew.-%) | Regalite R1090 (Gew.-%) | Uvacure 1500 (Gew.-%) | K-Pure CXC 1613[a] | SAFT (°C) | Klebkraft Stahl (N/cm) |
|---|---|---|---|---|---|---|
| E15 | 40 | 40 | 20 | 3 | 160 | 6,1 |
| E16 | 45 | 35 | 20 | 3 | 167 | 4,3 |

Die Beispiele E15 und E16 zeigen, dass dieses Konzept auch auf Polystyrol-Polyisopren-Blockcopolymer als Matrixpolymer anwendbar ist.

c) Erfindungsgemäße Haftklebemasse enthaltend Photoinitiator:

Ein weiteres Klebeband E17 wurde aus 40 Gew.-% Kraton HT1200 als Elastomer, 40 Gew.-% Regalite R1090 als Klebharz und 20 Gew.-% Uvacure 1500 als Reaktivharz hergestellt, wobei anstelle eines thermischen Initiators mit 9 Gew.-% Irgacure 290 Lösung, bezogen auf das Reaktivharz Uvacure 1500, ein Photoinitiator eingesetzt wurde. Das Klebeband wurde analog der thermisch gehärteten Klebebänder hergestellt, wobei die Härtung durch anschießende Bestrahlung mit UV-Licht an einer Eltosch Bandanlage mit einer Bahngeschwindigkeit von 4 m/min unter Verwendung eines Quecksilber-dotierten UV-Strahlers mit einer Leistung von 160 W/cm erfolgte.

Das sich ergebende Klebeband weist eine SAFT-Temperatur von 212 °C und eine Klebkraft auf Stahl von 5,1 N/cm auf. Das Beispiel E17 zeigt, dass die Härtung auch mit einem Photoinitiator anstelle eines thermischen Initiators durchgeführt werden kann.

d) Erfindungsgemäße mit Mikroballons geschäumte Haftklebemasse:

Die Herstellung des Klebebands E18 unterscheidet sich von der Herstellung des Klebebands E13 dadurch, dass die Klebstofflösung vor der Beschichtung auf eine silikonisierte PET-Folie mit 1,5 Gew.-% expandierbaren Mikroballons Expancel 920 DUT40 versetzt wurde, wobei die Mikroballons als Anschlämmung in Benzin eingesetzt wurden. Die Gewichtsanteile der Mikroballons beziehen sich hier auf das Trockengewicht der eingesetzten Lösung, zu der sie gegeben wurden (d.h. das Trockengewicht der eingesetzten Lösung wird als 100% festgesetzt). Die Vortrocknung für 10 min bei Raumtemperatur und Trocknung für 15 min bei 100 °C ergibt ein noch ungeschäumtes Klebeband. Anschließend wurde die offene Seite des Klebebandes mit einer weiteren Lage einer silikonisierten PET-Folie eingedeckt und das Klebeband für 1 min bei 170 °C geschäumt.

Das geschäumte Klebeband weist eine SAFT-Temperatur von 180 °C und eine Klebkraft auf Stahl von 5,7 N/cm auf. Das Beispiel E18 zeigt, dass auch mit Mikroballons geschäumte Klebebänder das gewünschte Eigenschaftsprofil aufweisen können, wie insbesondere eine hohe Wärmescherfestigkeit.

Prüfmethoden:

Alle Messungen wurden, sofern nichts anderes angegeben ist, bei 23 °C und 50 % rel. Luftfeuchtigkeit durchgeführt.

Die mechanischen und klebtechnischen Daten wurden wie folgt ermittelt:

*Test I - Wärmescherfestigkeit (SAFT)*

Dieser Test dient der Schnellprüfung der Scherfestigkeit von Klebebändern unter Temperaturbelastung. Dafür wird das zu untersuchende Klebeband auf eine temperierbare Stahlplatte geklebt, mit einem Gewicht (50 g) belastet und die Scherstrecke aufgezeichnet.

Messprobenpräparation:

Das zu untersuchende Klebeband (50 μm Transfertape) wird mit einer der Klebemassenseiten auf eine 50 μm dicke Aluminiumfolie geklebt. Das so präparierte Klebeband wird auf eine Größe von 10 mm * 50 mm geschnitten.

Die zugeschnittene Klebebandprobe wird mit der anderen Klebemassenseite auf eine polierte, mit Aceton gereinigte Stahl-Prüfplatte (Werkstoff 1.4301, DIN EN 10088-2, Oberfläche 2R, Oberflächen-Rauigkeit Ra = 30 bis 60 nm, Abmessungen 50 mm * 13 mm * 1,5 mm) derart verklebt, dass die Verklebungsfläche der Probe Höhe * Breite = 13 mm * 10 mm beträgt und die Stahl-Prüfplatte am oberen Rand um 2 mm überragt. Anschließend wird mit einer 2 kg-Stahlrolle und einer Geschwindigkeit von 10 m/min zur Fixierung sechsmal überrollt. Die Probe wird oben bündig mit einem stabilen Klebestreifen verstärkt, der als Auflage für den Wegmessfühler dient. Dann wird die Probe mittels der Stahlplatte derart aufgehängt, dass das länger überstehende Ende des Klebebandes senkrecht nach unten zeigt.

Messung:

Die zu messende Probe wird am unteren Ende mit einem Gewicht von 50 g belastet. Die Stahl-Prüfplatte mit der verklebten Probe wird beginnend bei 25 °C mit einer Rate von 9 K/min auf die Endtemperatur von 200 °C aufgeheizt.

Beobachtet wird der Rutschweg der Probe mittels Wegmessfühler in Abhängigkeit von Temperatur und Zeit. Der maximale Rutschweg ist auf 1000 μm (1 mm) festgelegt, bei überschreiten wird der Test abgebrochen und die Versagenstemperatur notiert. Prüfklima: Raumtemperatur 23 +/- 3 °C, relative Luftfeuchtigkeit 50 +/- 5%. Das Ergebnis ist der Mittelwert aus zwei Einzelmessungen und wird in °C angegeben.

*Test II - Klebkraft*

Die Untersuchung erfolgt in Anlehnung an PSTC-1. Ein 2 cm breiter und 15 cm langer Streifen des 50 $\mu$m dicken Klebebandmusters wird auf einer seiner Klebemassenseiten mit einer 25 $\mu$m dicken PET-Folie abgedeckt und mit der anderen Klebebandseite auf eine polierte Stahlplatte (ASTM) verklebt. Durch fünfmaliges doppeltes Überrollen mittels einer 4 kg Rolle wird für eine definierte Verklebung gesorgt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Das Prüfklima beträgt 23°C +/- 3 °C / 50% +/- 5% r.H. Das Ergebnis ist der Mittelwert aus drei Einzelmessungen und wird in N/cm angegeben.

*Test III - Glasübergangstemperatur Polymerblöcke, DSC*

Die Glasübergangstemperatur von Polymerblöcken in Blockcopolymeren wird mittels dynamischer Scanning Kalorimetrie (DSC) bestimmt. Dazu werden ca. 5 mg der unbehandelten Blockcopolymerproben in ein Aluminiumtiegelchen (Volumen 25 $\mu$L) eingewogen und mit einem gelochten Deckel verschlossen. Zur Messung wird ein DSC 204 F1 der Firma Netzsch verwendet und unter Stickstoff zur Inertisierung gearbeitet. Die Probe wird zunächst auf -150 °C abgekühlt, mit einer Heizrate von 10 K/min bis +150 °C aufgeheizt und erneut auf -150 °C abgekühlt. Die sich anschließende zweite Heizkurve wird erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet. An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur.

*Test IV - Molmasse, GPC*

(a) Peakmolmasse von einzelnen Blockcopolymermoden:

GPC bietet sich als messtechnisches Verfahren zur Bestimmung der Molmasse einzelner Polymermoden in Gemischen verschiedener Polymere an. Für die im Sinne dieser Erfindung einsetzbaren durch lebende anionische Polymerisation hergestellten Blockcopolymere sind die Molmassenverteilungen typischerweise ausreichend eng, so dass Polymermoden, die sich Triblockcopolymeren, Diblockcopolymeren oder Multiblockcopolymeren zuordnen lassen, ausreichend voneinander aufgelöst im Elugramm auftreten. Es lässt sich dann die Peakmolmasse für die einzelnen Polymermoden aus den Elugrammen ablesen.

Peakmolmassen $M_P$ werden mittels Gelpermeationschromatographie (GPC) bestimmt. Als Eluent wird THF eingesetzt. Die Messung erfolgt bei 25 °C. Als Vorsäule wird PSS-SDV, 10 $\mu$, ID 8,0 mm x 50 mm verwendet. Zur Auftrennung werden die Säulen PSS-SDV, 10 $\mu$, $10^3$ Å sowie $10^5$ Å und $10^6$ Å mit jeweils ID 8,0 mm x 300 mm eingesetzt. Die Probenkonzentration beträgt 3 g/l, die Durchflussmenge 1,0 ml pro Minute. Es wird gegen PS Standards gemessen. Die Kalibrierung wird dabei mittels des kommerziell verfügbaren ReadyCal-Kits Poly(styrene) high der Firma PSS Polymer Standard Service GmbH, Mainz, durchgeführt ($\mu$ = $\mu$m; 1 Å = $10^{-10}$ m).

(b) gewichtsmittlere Molmasse insbesondere von Klebharzen:

Das gewichtsmittlere Molekulargewicht $M_W$ (M.W.) wird mittels Gelpermeationschromatographie (GPC) bestimmt. Als Eluent wird THF eingesetzt. Die Messung erfolgt bei 25 °C. Als Vorsäule wird PSS-SDV, 10 $\mu$, ID 8,0 mm x 50 mm verwendet. Zur Auftrennung werden die Säulen PSS-SDV, 10 $\mu$, $10^3$ Å sowie $10^4$ Å und $10^6$ Å mit jeweils ID 8,0 mm x 300 mm eingesetzt. Die Probenkonzentration beträgt 3 g/l, die Durchflussmenge 1,0 ml pro Minute. Es wird gegen PS Standards gemessen. Die Kalibrierung wird dabei mittels des kommerziell verfügbaren ReadyCal-Kits Poly(styrene) high der Firma PSS Polymer Standard Service GmbH, Mainz, durchgeführt ($\mu$ = $\mu$m; 1 Å = $10^{-10}$ m).

*Test V - Harzverträglichkeit, DACP*

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*Test VI - Harzverträglichkeit, MMAP*

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

*Test VII - Harzerweichungstemperatur*

Die Bestimmung der Klebharzerweichungstemperatur wird nach der einschlägigen Methodik durchgeführt, die als Ring & Ball bekannt ist und nach ASTM E28 standardisiert ist.

**Patentansprüche**

1. Haftklebemasse umfassend

   a) eine Basisformulierung enthaltend

      (i) 25 bis 45 Gew.-% mindestens einer Elastomerkomponente enthaltend mindestens ein Polyvinylaromat-Polydien-Blockcopolymer,

         wobei das Polyvinylaromat-Polydien-Blockcopolymer mindestens anteilig einen Aufbau A-B-A, $(A\text{-}B)_n$, $(A\text{-}B)_n X$ oder $(A\text{-}B\text{-}A)_n X$ hat, worin

            - die Blöcke A unabhängig voneinander für ein Polymer, gebildet durch Polymerisation mindestens eines Vinylaromaten,
            - die Blöcke B unabhängig voneinander für ein Polymer, gebildet durch Polymerisation von konjugierten Dienen mit 4 bis 18 C-Atomen oder für ein im Polydien-Block teilhydriertes Derivat eines solchen Polymers,
            - X für den Rest eines Kopplungsreagenzes oder Initiators und
            - n für eine ganze Zahl ≥ 2 stehen,

         wobei die Peak-Molmasse des mindestens einen Polyvinylaromat-Polydien-Blockcopolymers nach Test IVa bei mindestens 160 000 g/mol liegt, bevorzugt bei mindestens 200 000 g/mol,
         wobei der Anteil an A-Blöcken in dem mindestens einen Polyvinylaromat-Polydien-Blockcopolymer bei mindestens 8 Gew.-% und höchstens 25 Gew.-% liegt, und
         wobei der Anteil an Diblockcopolymer A-B enthaltend Blöcke A und B wie vorstehend definiert bei höchstens 25 Gew.-% liegt bezogen auf die gesamte Elastomerkomponente,

      (ii) 33 bis 55 Gew.-% mindestens einer Klebharzkomponente mit mindestens einem Klebharz, wobei das mindestens eine Klebharz eine Erweichungstemperatur (Ring & Ball, Test VII) von ≥ 80 °C, vorzugsweise ≥ 100 °C, und bevorzugt bis zu 130 °C aufweist, und
      (iii) 13 bis 30 Gew.-% mindestens einer Reaktivharzkomponente enthaltend zu mindestens 70 Gew.-% mindestens ein Reaktivharz auf Basis eines cyclischen Ethers mit einem dispersen Anteil des Hansen-Parameters, $\delta_D$, von 17,50 bis 17,82 MPa$^{1/2}$, vorzugsweise 17,70 bis 17,80 MPa$^{1/2}$,

   jeweils bezogen auf die Basisformulierung, wobei die Summe aus der Elastomerkomponente und der Reaktivharzkomponente mindestens 38 Gew.-% und höchstens 68 Gew.-% beträgt,
b) 0,1 bis 5 Gew.-%, bezogen auf die Menge an Reaktivharzkomponente, mindestens eines Initiators für die kationische Härtung des mindestens einen Reaktivharzes,
c) optional mindestens einen Weichmacher und
d) optional mindestens ein Additiv.

2. Haftklebemasse nach Anspruch 1, wobei das Polyvinylaromat-Polydien-Blockcopolymer ein Polystyrol-Polybutadien-Blockcopolymer, ein Polystyrol-Polyisopren-Blockcopolymer oder Polystyrol-Polyfarnesen-Blockcopolymer ist, und insbesondere ein Polystyrol-Polybutadien-Blockcopolymer ist.

3. Haftklebemasse nach einem der vorhergehenden Ansprüche, wobei das Polyvinylaromat-Polydien-Blockcopolymer ein Gemisch aus (i) Triblockcopolymer A-B-A oder $(A-B)_2X$ und (ii) radialem $(A-B)_nX$-Blockcopolymer ist, worin n für eine ganze Zahl $\geq 3$ steht.

4. Haftklebemasse nach einem der vorstehenden Ansprüche, wobei sich der disperse Anteil des Hansen-Parameter, $\delta_D$, des Reaktivharzes um höchstens 2 MPa$^{1/2}$ vom dispersen Anteil des Hansen-Parameters, $\delta_D$, des Polyvinylaromaten des mindestens einen Polyvinylaromat-Polydien-Blockcopolymers unterscheidet.

5. Haftklebemasse nach einem der vorstehenden Ansprüche, wobei das mindestens eine Reaktivharz auf Basis eines cyclischen Ethers ein Epoxid oder ein Oxetan ist, und insbesondere ein Epoxid wie zum Beispiel ein Diepoxid ist.

6. Haftklebemasse nach Anspruch 5, wobei das Reaktivharz auf Basis eines cyclischen Ethers aliphatischer oder cycloaliphatischer Natur ist, und insbesondere cycloaliphatischer Natur ist, wie zum Beispiel (3,4-Epoxycyclohexyl) methyl-3,4-epoxycyclohexylcarboxylat ist.

7. Haftklebemasse nach einem der vorstehenden Ansprüche, wobei der Initiator ausgewählt ist aus thermisch aktivierbaren Initiatoren für die Initiierung einer kationischen Härtung, strahlenchemischen Initiatoren für die Initiierung einer kationischen Härtung, insbesondere UV Initiatoren, sowie Mischungen von diesen.

8. Gehärtete Haftklebemasse erhältlich oder erhalten durch Härten einer Haftklebemasse gemäß einem der Ansprüche 1 bis 7.

9. Klebeband, das mindestens eine Schicht einer Haftklebemasse gemäß einem der Ansprüche 1 bis 7 oder einer gehärteten Haftklebemasse gemäß Anspruch 8 umfasst.

10. Klebeband nach Anspruch 9, wobei das Klebeband ein Transferklebeband ist, das vorzugsweise aus einer einzigen Schicht einer Haftklebemasse gemäß einem der Ansprüche 1 bis 7 oder einer gehärteten Haftklebemasse gemäß Anspruch 8 besteht.

11. Klebeband nach Anspruch 9, wobei das Klebeband mindestens einen Träger umfasst, auf dem mindestens einseitig, vorzugsweise beidseitig eine Schicht einer Haftklebemasse gemäß einem der Ansprüche 1 bis 7 oder einer gehärteten Haftklebemasse gemäß Anspruch 8 aufgebracht ist.

12. Klebeband nach Anspruch 11, wobei der Träger vorzugsweise ein Schaumträger ist, insbesondere ein Polyolefin-, Polyurethan- oder Polyacrylat-Schaumträger.

13. Verfahren zur Herstellung eines Klebebands nach einem der Ansprüche 9 bis 12, bei dem eine lösungsmittelhaltige Klebemasse beschichtet und getrocknet wird und die thermische Härtung der Klebemasse während des Trocknungsprozesses erfolgt oder initiiert wird.

14. Verfahren nach Anspruche 13, bei dem mindestens ein Lösungsmittel verwendet wird, das bei einem Druck von 1013 mbar einen Siedepunkt von mindestens 75 °C, vorzugsweise mindestens 90 °C aufweist und zudem einen Hildebrand-Parameter von größer als 7,5 cal$^{1/2}$ cm$^{-3/2}$ und kleiner als 10 cal$^{1/2}$ cm$^{-3/2}$ aufweist.

**Claims**

1. A pressure-sensitive adhesive comprising

a) a base formulation containing

(i) 25 to 45% by weight of at least one elastomer component containing at least one polyvinylaromatic-polydiene block copolymer,
wherein at least a fraction of the polyvinylaromatic-polydiene block copolymer has an A-B-A, $(A-B)_n$, $(A-B)_nX$ or $(A-B-A)_nX$ structure, in which

- the blocks A, independently of one another, represent a polymer formed by polymerisation of at least one vinylaromatic compound,
- the blocks B, independently of one another, represent a polymer formed by polymerisation of conjugated dienes containing 4 to 18 C atoms or represent a derivative of such a polymer which is partially hydrogenated in the polydiene block,
- X represents the residue of a coupling reagent or initiator and
- n represents an integer $\geq 2$,

wherein the peak molar mass of the at least one polyvinylaromatic-polydiene block copolymer is at least 160000 g/mol, preferably at least 200000 g/mol according to Test IVa,
wherein the fraction of A blocks in the at least one polyvinylaromatic-polydiene block copolymer is at least 8% by weight and at most 25% by weight, and
wherein the fraction of diblock copolymer A-B containing blocks A and B as defined above is at most 25% by weight with respect to the total elastomer component,

(ii) 33 to 55% by weight of at least one tackifying resin component with at least one tackifying resin, wherein the at least one tackifying resin has a softening temperature (Ring & Ball, Test VII) of $\geq 80°C$, preferably of $\geq 100°C$, and more preferably up to 130°C, and
(iii) 13 to 30% by weight of at least one reactive resin component containing to at least 70% by weight of at least one reactive resin based on a cyclic ether with a dispersive component of the Hansen parameter, $\delta_D$, of 17.50 to 17.82 $MPa^{1/2}$, preferably 17.70 to 17.80 $MPa^{1/2}$,

each related to the base formulation, wherein the sum of the elastomer component and the reactive resin component is at least 38% by weight and at most 68% by weight,
b) 0.1 to 5% by weight, with respect to the quantity of reactive resin component, of at least one initiator for the cationic curing of the at least one reactive resin,
c) optionally, at least one plasticizer, and
d) optionally, at least one additive.

2. The pressure-sensitive adhesive as claimed in claim 1, wherein the polyvinylaromatic-polydiene block copolymer is a polystyrene-polybutadiene block copolymer, a polystyrene-polyisoprene block copolymer or polystyrene-polyfarnesene block copolymer, and in particular is a polystyrene-polybutadiene block copolymer.

3. The pressure-sensitive adhesive as claimed in one of the preceding claims, wherein the polyvinylaromatic-polydiene block copolymer is a mixture of (i) triblock copolymer A-B-A or $(A-B)_2X$ and (ii) radial $(A-B)_nX$ block copolymer, in which n represents an integer $\geq 3$.

4. The pressure-sensitive adhesive as claimed in one of the preceding claims, wherein the dispersive component of the Hansen parameter, $\delta_D$, of the reactive resin differs by at most 2 $MPa^{1/2}$ from the dispersive component of the Hansen parameter, $\delta_D$, of the polyvinylaromatic compound of the at least one polyvinylaromatic-polydiene block copolymer.

5. The pressure-sensitive adhesive as claimed in one of the preceding claims, wherein the at least one reactive resin based on a cyclic ether is an epoxy compound or an oxetane compound, and in particular an epoxy compound such as a diepoxy compound, for example.

6. The pressure-sensitive adhesive as claimed in claim 5, wherein the reactive resin based on a cyclic ether is aliphatic or cycloaliphatic in nature, and in particular is cycloaliphatic in nature, such as (3,4-epoxycyclohexyl)methyl-3,4-epoxycyclohexyl carboxylate, for example.

7. The pressure-sensitive adhesive as claimed in one of the preceding claims, wherein the initiator is selected from thermally activatable initiators for initiating cationic curing, radiochemical initiators for initiating cationic curing, in particular UV initiators, as well as mixtures thereof.

8. A cured pressure-sensitive adhesive obtainable or obtained by curing a pressure-sensitive adhesive as claimed in one of claims 1 to 7.

9. An adhesive tape which comprises at least one layer of a pressure-sensitive adhesive as claimed in one of claims 1 to 7 or a cured pressure-sensitive adhesive as claimed in claim 8.

10. The adhesive tape as claimed in claim 9, wherein the adhesive tape is an adhesive transfer tape, which preferably consists of a single layer of a pressure-sensitive adhesive as claimed in one of claims 1 to 7 or a cured pressure-sensitive adhesive as claimed in claim 8.

11. The adhesive tape as claimed in claim 9, wherein the adhesive tape comprises at least one carrier on which a layer of a pressure-sensitive adhesive as claimed in one of claims 1 to 7 or of a cured pressure-sensitive adhesive as claimed in claim 8 has been applied to at least one side, preferably both sides.

12. The adhesive tape as claimed in claim 11, wherein the carrier is preferably a foam carrier, in particular a polyolefin foam carrier, polyurethane foam carrier or polyacrylate foam carrier.

13. A process for the production of an adhesive tape as claimed in one of claims 9 to 12, in which a solvent-containing adhesive compound is coated and dried and thermal curing of the adhesive compound is carried out or is initiated during the drying process.

14. The process as claimed in claim 13, in which at least one solvent is used which has a boiling point of at least 75°C, preferably at least 90°C, at a pressure of 1013 mbar, and in addition has a Hildebrand parameter of greater than 7.5 $cal^{1/2}cm^{-3/2}$ and less than 10 $cal^{1/2}cm^{-3/2}$.

**Revendications**

1. Masse d'adhésif sensible à la pression, comprenant

    a) une formulation de base, contenant

        (i) 25 à 45 % en poids d'au moins un constituant élastomère qui contient au moins un copolymère à blocs de type poly(composé vinylaromatique)-poly(diène),

        le copolymère à blocs de type poly(composé vinylaromatique)-poly(diène) ayant une structure proportionnelle A-B-A, $(A-B)_n$, $(A-B)_nX$ ou $(A-B-A)_nX$ dans laquelle

            - les blocs A représentant indépendamment l'un de l'autre un polymère formé par polymérisation d'au moins un composé vinylaromatique,
            - les blocs B représentent, indépendamment l'un de l'autre, un polymère formé par polymérisation de diènes conjugués renfermant 4 à 18 atomes de C ou un dérivé d'un tel polymère qui a subi, au sein du bloc de type poly(diène), une hydrogénation partielle,
            - X représente le radical d'un réactif de couplage ou d'un initiateur, et
            - n représente un nombre entier $\geq 2$,

        la masse moléculaire maximale de l'au moins un copolymère à blocs de type poly(composé vinylaromatique)-poly(diène) étant, selon l'essai IVa, supérieure au égale à 160 000 g/mol, de préférence supérieure ou égale à 200 000 g/mol,
        la proportion de blocs A dans l'au moins un copolymère à blocs de type poly(composé vinylaromatique)-poly(diène) étant supérieure ou égale à 8 % en poids et inférieure ou égale à 25 % en poids, et la proportion de copolymère dibloc A-B qui contient les blocs A et B tels que définis ci-avant étant inférieure ou égale à 25 % en poids, par rapport à l'ensemble du constituant élastomère,

        (ii) 33 à 55 % en poids d'au moins un constituant de type résine collante comportant au moins une résine collante, l'au moins une résine collante ayant une température de ramollissement (Ring & Ball, essai VII) de $\geq$

80 °C, de préférence ≥ 100 °C, et pouvant de préférence atteindre jusqu'à 130 °C, et

(iii) 13 à 30 % en poids d'au moins un constituant de type résine réactive contenant, à au moins 70 % en poids, au moins une résine réactive à base d'un éther cyclique dont le paramètre de Hansen présente une proportion dispersée, $\delta_D$, comprise entre 17,50 et 17,82 MPa$^{1/2}$, de préférence entre 17,70 et 17,80 MPa$^{1/2}$,

à chaque instance par rapport à la formulation de base, la somme du constituant élastomère et du constituant de type résine réactive étant supérieure ou égale à 38 % en poids et inférieure ou égale à 68 % en poids,

b) 0,1 à 5 % en poids, par rapport à la quantité du constituant de type résine réactive, d'au moins un initiateur pour le durcissement cationique de l'au moins une résine réactive,

c) optionnellement, au moins un plastifiant, et

d) optionnellement, au moins un additif.

2.  Masse d'adhésif sensible à la pression selon la revendication 1, le copolymère à blocs de type poly(composé vinylaromatique)-poly(diène) étant un copolymère à blocs de type polystyrène-polyisoprène ou un copolymère à blocs de type polystyrène-polyfarnésène, et notamment un copolymère à blocs de type polystyrène-polybutadiène.

3.  Masse d'adhésif sensible à la pression selon l'une des revendications précédentes, le copolymère à blocs de type poly(composé vinylaromatique)-poly(diène) étant un mélange à partir (i) d'un copolymère tribloc A-B-A ou (A-B)$_2$X et (ii) d'un copolymère à blocs radial (A-B)$_n$X, dans lequel n représente un nombre entier ≥ 3.

4.  Masse d'adhésif sensible à la pression selon l'une des revendications précédentes, la différence entre la proportion dispersée du paramètre de Hansen, $\delta_D$, de la résine réactive et la proportion dispersée du paramètre de Hansen, $\delta_D$, du composé vinylaromatique de l'au moins un copolymère à blocs de type poly(composé vinylaromatique)-poly(diène) étant inférieure ou égale à 2 MPa$^{1/2}$.

5.  Masse d'adhésif sensible à la pression selon l'une des revendications précédentes, l'au moins une résine réactive à base d'un éther cyclique étant un époxyde ou un oxétane, s'agissant notamment d'un époxyde tel que, par exemple, un diépoxyde.

6.  Masse d'adhésif sensible à la pression selon la revendication 5, la résine réactive à base d'un éther cyclique étant de nature aliphatique ou cycloaliphatique, notamment de nature cycloaliphatique, s'agissant par exemple de carboxylate de (3,4-époxycyclohexyl)méthyl-3,4-époxycyclohexyle.

7.  Masse d'adhésif sensible à la pression selon l'une des revendications précédentes, ledit initiateur étant choisi parmi les initiateurs à activation thermique destinés à initier un durcissement cationique, les initiateurs relatifs à la chimie sous l'effet d'un rayonnement destinés à initier un durcissement cationique, s'agissant notamment d'initiateurs UV, ainsi que de mélanges de ceux-ci.

8.  Masse d'adhésif sensible à la pression, obtenue ou susceptible de l'être en durcissant une masse d'adhésif sensible à la pression selon l'une des revendications 1 à 7.

9.  Ruban adhésif comprenant au moins une couche d'une masse d'adhésif sensible à la pression selon l'une des revendications 1 à 7 ou d'une masse durcie d'adhésif sensible à la pression selon la revendication 8.

10. Ruban adhésif selon la revendication 9, ledit ruban adhésif étant un ruban adhésif transfert qui est de préférence constitué d'une seule couche d'une masse d'adhésif sensible à la pression selon l'une des revendications 1 à 7 ou d'une masse durcie d'adhésif sensible à la pression selon la revendication 8.

11. Ruban adhésif selon la revendication 9, ledit ruban adhésif comprenant au moins un support dont au moins une face, de préférence les deux faces, ont été dotées d'une couche d'une masse d'adhésif sensible à la pression selon l'une des revendications 1 à 7 ou d'une masse durcie d'adhésif sensible à la pression selon la revendication 8.

12. Ruban adhésif selon la revendication 11, ledit support étant de préférence un support en mousse, notamment un support en mousse de polyoléfine, de polyuréthane ou de polyacrylate.

13. Procédé de fabrication d'un ruban adhésif selon l'une des revendications 9 à 12, consistant à disposer sous forme d'une couche puis sécher une masse d'adhésif contenant du solvant, le durcissement thermique de ladite masse d'adhésif étant réalisé ou initié pendant le processus de séchage.

**14.** Procédé selon la revendication 13, dans lequel on utilise au moins un solvant dont le point d'ébullition à une pression de 1013 mbar est supérieure ou égale à 75 °C, de préférence supérieure ou égale à 90 °C, et qui présente en outre un paramètre de Hildebrand supérieure à 7,5 $cal^{1/2}$ $cm^{-3/2}$ and inférieure à 10 $cal^{1/2}$ $cm^{-3/2}$.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012212879 A1
- US 5372870 A
- WO 0024840 A1
- WO 0022062 A1
- DE 102008056980 A1
- DE 102015109659 A1
- DE 102009026548 A1
- DE 102012202377 A1
- DE 102015212058 A1
- JP 2000290619 A
- JP 2018002950 A
- WO 1999009101 A1
- US 7429419 B2
- DE 102018202545 A1
- WO 2020048799 A1
- DE 102016202018 A1
- US 20140367670 A1
- US 5242715 A
- EP 393893 A1
- WO 2013156509 A2
- JP 2014062057 A
- JP 2012056915 A
- US 6908722 B1
- US 4231951 A
- US 4256828 A
- US 4058401 A
- US 4138255 A
- US 2010063221 A1
- US 3729313 A
- US 3741769 A
- US 4250053 A
- US 4394403 A
- EP 542716 B1

**In der Beschreibung aufgeführte Nicht-Patentliteratur**

- Kristalex and Endex Hydrocarbon Resins for Improved PSA Performance. Document Number TT-85. Eastman Chemical Company, August 2007
- Micro and nanostructured epoxy/rubber blends. John Wiley & Sons, 2014
- **ERIC A.GRULKE**. Polymer Handbook, 519-559
- *J. Polym. Sci. A*, 1995, vol. 33, 505
- *J. Polym. Sci. B*, 2001, vol. 39, 2397
- *Macromolecules*, 1990, vol. 23, 431
- *Macromolecules*, 1991, vol. 24, 2689
- *Macromol. Chem. Phys.*, 2001, vol. 202, 2554
- *CHEMICAL ABSTRACTS*, 1330-20-7
- *CHEMICAL ABSTRACTS*, 123-42-2
- *CHEMICAL ABSTRACTS*, 62-53-3
- *CHEMICAL ABSTRACTS*, 108-87-2